# EUROPÄISCHE PATENTSCHRIFT

(11) **EP 4 419 303 B1**
(45) Veröffentlichungstag und Bekanntmachung des Hinweises auf die Patenterteilung: **22.10.2025**
(21) Anmeldenummer: 22801471.8
(22) Anmeldetag: 13.10.2022
(51) Int. Cl.: B07C 5/14, B65G 15/14, B65G 35/00, B65G 21/20, B65G 47/244, B65G 47/52, B65G 21/22, B65G 21/02, B65G 17/00, B65G 17/14, B65G 47/82, B27B 31/00

(54) **FÖRDERANLAGE ZUM LÄNGSTRANSPORT VON LÄNGLICHEM STÜCKGUT**
CONVEYING SYSTEM FOR LONGITUDINALLY TRANSPORTING ELONGATE ITEMS
SYSTÈME DE CONVOYAGE POUR LE TRANSPORT LONGITUDINAL D'ARTICLES ALLONGÉS

(30) Priorität: 20.10.2021 AT 508342021; 20.10.2021 AT 508352021; 25.02.2022 AT 501262022
(43) Veröffentlichungstag der Anmeldung: 28.08.2024
(73) Patentinhaber: Springer Maschinenfabrik GmbH, 9360 Friesach (AT)
(72) Erfinder: KNAPP, Florian, 8812 St. Blasen (AT); PÖTSCHER, Julian, 9300 St. Veit an der Glan (AT)
(74) Vertreter: Gibler & Poth Patentanwälte KG
(86) Internationale Anmeldenummer: PCT/EP2022/078489
(87) Internationale Veröffentlichungsnummer: WO 2023/066781

(56) Entgegenhaltungen:
- EP-A2- 0 203 898
- WO-A1-2021/159159
- AT-B- 343 539
- DE-A1- 2 014 857
- DE-A1- 3 024 699
- GB-A- 2 345 026
- GB-A- 372 480
- GB-A- 737 342
- US-A- 3 960 267
- US-A1- 2006 037 450
- US-A1- 2010 200 118
- US-A1- 2011 201 241

## Beschreibung

Die Erfindung betrifft eine Förderanlage zum Längstransport von länglichem Stückgut mit einem umlaufenden Zugband und einer Stützkonstruktion für das umlaufende Zugband gemäß dem Oberbegriff des Patentanspruches 1.

Es ist bekannt, dass Förderanlagen zum Transport von Fördergüter verwendet werden. Dabei wird bekanntermaßen nach dem zu transportierenden Fördergut, wie Stückgut und Schüttgut, unterschieden, wobei die Förderanlagen an die spezifischen Beschaffenheiten der Fördergüter angepasst sind. Dabei finden Förderanlagen für den Transport von länglichem Stückgut oftmals Verwendung bei Holz verarbeitenden Prozessen. Hierdurch können beispielsweise in Sägewerken Rundhölzer über Förderanlagen zu Holz verarbeitenden Maschinen transportiert und zu Schnittholz verarbeitet werden.

Aus der GB 737 342 A ist ein Fördersystem mit einer Mehrzahl an Förderwägen, welche Förderwägen mittels Kuppelelemente miteinander verbunden sind und an den Förderwägen ein Fördergurt befestigt ist, gezeigt.

Aus der EP 0 203 898 A2 ist eine Förderstrecke mit Paletten zum Befördern schwerer Lasten umfassend zwei um eine vertikale Achse schwenkbar gelagerte Führungssegmente, welche jeweils in einer von Führungswänden bestimmten Bahn geführt sind, gezeigt.

Aus der US 2010/200118 A1, welche die Merkmale des Oberbegriffs des Anspruch 1 offenbart, ist ein Rundholzfördersystem umfassend einen Fördergurt und zwei Förderschienen mit zwei Gleitflächen gezeigt. An dem Fördergurt sind eine Mehrzahl an Auflager befestigt, welche Auflager eine Vertiefung zur Aufnahme eines Rundholzes aufweisen.

Oftmals werden Förderanlagen bzw. Längsförderer bei Sortieranlagen, wie beispielsweise einer Rundholzsortieranlage, eingesetzt, um längliche Stückgüter entlang der Förderrichtung zu transportieren. Dabei weisen derartige Förderanlagen in der Regel eine Gleitführung für an einer Kette geführte Mitnehmer auf. Die mittels der Förderanlagen geförderten länglichen Stückgüter werden dabei auf einer Sortierstraße nach vorgegebenen Kriterien sortiert, wobei die sortierten länglichen Stückgüter von den Förderanlagen vorgebbar in Sortierbehälter abgeworfen werden.

Nachteilig bei den bisher bekannten Förderanlagen ist, dass die Förderanlagen mit einer stark überhöhten Antriebsleistung betrieben werden müssen, um einerseits Reserven für eine ungleichmäßige Belegung von länglichen Stückgütern auf der Längssortierstrecke zur Verfügung zu haben und andererseits genügend Leistung für das Anfahren bzw. Losgleiten der Förderanlagen zur Verfügung zu haben. Durch die Gleitführung der an der Kette geführten Mitnehmer sind weiters gängige Förderanlagen üblicherweise mit einer Zentralölschmierung ausgestattet, um die Reibung zwischen den beweglichen Teilen möglichst gering zu halten. Nachdem derartige Zentralölschmierungen keine zu der Umwelt bzw. zu dem Aufstellungsort der Förderanlagen abgeschlossenen Systeme darstellen, kann ein großer Teil des verwendeten Schmieröls in die Umwelt gelangen und diese verschmutzen.

Ein weiterer Nachteil bei derzeit bekannten Förderanlagen, insbesondere bei Förderanlagen für Rundholzsortieranlagen, ist, dass zwischen den mit den Förderanlagen transportierten länglichen Stückgütern uneinheitliche Lücken zwischen den Stückgütern vorhanden sind. Derartige uneinheitliche Lücken entstehen für gewöhnlich durch eine undefinierte Übergabe der länglichen Stückgüter aus dem Quertransport in den Längstransport mittels einer Annahmeeinheit einer Sortieranlage. Aus diesem Grund umfassen gängige Förderanlagen üblicherweise diverse Sensoren zur Messung der Lücken zwischen den länglichen Stückgütern, wobei die Fördergeschwindigkeiten der Förderanlagen derart angepasst werden, dass diese Lücken vereinheitlicht bzw. harmonisiert werden.

Aufgabe der Erfindung ist es daher eine Förderanlage der eingangs genannten Art anzugeben, mit welcher die genannten Nachteile vermieden werden können, mit welcher längliches Stückgut umweltfreundlich und effizient im Längstransport gefördert werden kann.

Erfindungsgemäß wird dies durch die Merkmale des Patentanspruches 1 erreicht.

Dadurch ergibt sich der Vorteil, dass eine Förderanlage bereitgestellt werden kann, mit welcher längliches Stückgut in Längstransportrichtung umweltfreundlich und effizient transportiert werden kann. Durch die Kombination des wenigstens eines Zugelements und der beweglichen Lagerung des umlaufenden Zugsbandes in dem Förderbereich mittels Rollen kann gänzlich auf den Einsatz einer Ölschmierung an freiliegenden Teilen der Förderanlage verzichtet werden, wodurch auch der Wartungsaufwand der Förderanlage und die laufenden Betriebskosten der Förderanlage reduziert werden können. Dadurch kann auch kein Öl an dem Aufstellungsort der Förderanlage in die Umwelt gelangen, wodurch eine Kontamination der Umwelt vermieden wird. Durch die bewegliche Lagerung des umlaufenden Zugbandes gegenüber der Stützkonstruktion mittels Rollen in dem Förderbereich kann die Förderanlage weiters mit einer geringeren Antriebsleistung als eine Förderanlage mit kettengeführten Mitnehmern betrieben werden, wobei dennoch die Fördergeschwindigkeit der Förderanlage gegenüber einer kettenbetriebenen Förderanlage erhöht werden kann. Dadurch, dass jeder Auflager an zumindest zwei voneinander beabstandeten Befestigungspunkten mit dem wenigstens einem Zugelement befestigt ist, kann mittels einer möglichst einfachen Bauweise eine hohe Verwindungssteifigkeit des umlaufenden Zugbandes gegenüber Stößen und seitlich einwirkenden Kräften erreicht werden, wobei auf eine aufwendige Führung der Auflager in dem Förderbereich entlang der Längstransportrichtung verzichtet werden kann. Durch die bewegliche Lagerung des umlaufenden Zugbandes in dem Förderbereich mittels Rollen ergibt sich weiters auch der Vorteil, dass die Lärmbelastung der Förderanlage bei einem Förderprozess im Gegensatz zu einer Förderanlage mit kettengeführten Mitnehmern deutlich reduziert wird, wodurch Anrainer sowie Arbeiter, welche in der Nähe einer derartigen Förderanlage wohnen bzw. arbeiten, einer deutlich reduzierteren Lärmbelastung als bei kettengeführten Förderanlagen ausgesetzt sind. Weiters kann durch die bewegliche Lagerung des umlaufenden Zugbandes mittels Rollen in dem Förderbereich auch die Reibung zwischen dem umlaufenden Zugband und der Stützkonstruktion gegenüber einer Förderanlage mit kettengeführten Mitnehmern reduziert werden, wodurch sich die Lebenszeit der Förderanlage gegenüber bisher bekannten Förderanlagen verlängert und Energiekosten zum Betreiben der Förderanlage reduziert werden. Durch die Kombination des wenigstens einen Zugelements und der Rollen ergibt sich noch ein weiterer Synergieeffekt, wodurch die Wartung sowie der Aufbau der Förderanlage deutlich erleichtert wird. Dadurch können auch schon in einer Produktionsanlage Teile der Förderanlage in eine Liefereinheit eingebaut werden, wodurch in vorteilhafterweise auch Teile der Förderanlage gegenüber einer Förderanlage mit kettengeführten Mitnehmern erleichtert ausgetauscht werden können.

Die Erfindung betrifft weiters eine Sortieranlage gemäß dem Patentanspruch 14.

Die Unteransprüche betreffen weitere vorteilhafte Ausgestaltungen der Erfindung. Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
[weiter auf Seite 4 der ursprünglichen Beschreibung]
Fig. 1 eine erste bevorzugte Ausführungsform einer Förderanlage zum Längstransport von länglichem Stückgut in axonometrischer Darstellung,
Fig. 2 ein Detail der in Fig. 1 gezeigten ersten bevorzugten Ausführungsform der Förderanlage in axonometrischer Darstellung,
Fig. 3 die erste bevorzugte Ausführungsform der Förderanlage als Teil einer Sortieranlage in axonometrischer Darstellung,
Fig. 4 zumindest teilweise die in Fig. 3 gezeigte erste bevorzugte Ausführungsform der Förderanlage als Teil der Sortieranlage in Seitenansicht,
Fig. 5 den in Fig. 4 gezeigten Schnitt nach AA der ersten bevorzugten Ausführungsform der Förderanlage,
Fig. 6 ein erstes Detail aus Fig. 5 der ersten bevorzugten Ausführungsform der Förderanlage,
Fig. 7 ein zweites Detail aus Fig. 5 der ersten bevorzugten Ausführungsform der Förderanlage,
Fig. 8 die in Fig. 1 gezeigte erste bevorzugte Ausführungsform der Förderanlage in Seitenansicht,
Fig. 9 den in Fig. 8 gezeigten Schnitt nach BB der ersten bevorzugten Ausführungsform der Förderanlage,
Fig. 10 ein Detail aus Fig. 9 der ersten bevorzugten Ausführungsform der Förderanlage,
Fig. 11 eine zweite bevorzugte Ausführungsform der Förderanlage zum Längstransport von länglichem Stückgut in axonometrischer Darstellung,
Fig. 12 einen Schnitt senkrecht zur Längstransportrichtung der zweiten bevorzugten Ausführungsform der Förderanlage,
Fig. 13 ein Detail aus Fig. 12 der zweiten bevorzugten Ausführungsform der Förderanlage zum Längstransport von länglichem Stückgut,
Fig. 14 eine bevorzugte Ausführungsform einer Umlenkvorrichtung einer Sortieranlage für längliches Stückgut in axonometrischer Ansicht,
Fig. 15 die bevorzugte Ausführungsform der Umlenkvorrichtung der Sortieranlage für längliches Stückgut in Frontansicht und
Fig. 16 die bevorzugte Ausführungsform der Umlenkvorrichtung der Sortieranlage für längliches Stückgut in Draufsicht.

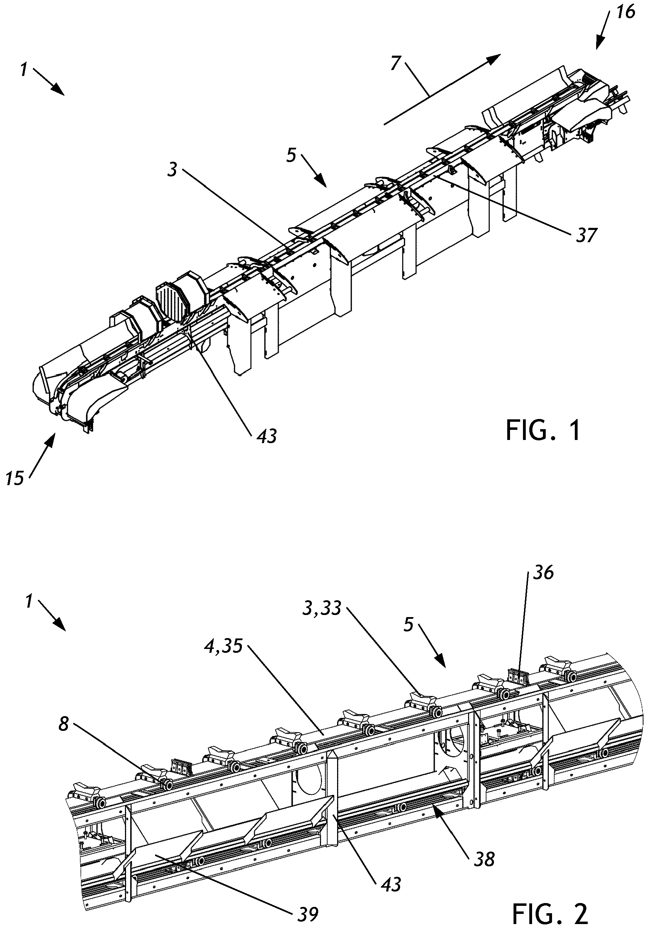

Die Fig. 1 bis 13 zeigen zumindest Teile einer ersten und einer zweiten bevorzugten Ausführungsform einer Förderanlage 1 zum Längstransport von länglichem Stückgut 2 mit einem umlaufenden Zugband und einer Stützkonstruktion 43 für das umlaufende Zugband, wobei mehrere Auflager 3 mittels wenigstens eines Zugelements 4 zu dem umlaufenden Zugband verbunden sind, wobei jedes der Auflager 3 eine Vertiefung 33 zum Auflegen des länglichen Stückguts 2 aufweist, wobei jedes der Auflager 3 an zumindest zwei voneinander beabstandeten Befestigungspunkten 34 mit dem wenigstens einen Zugelement 4 befestigt ist, wobei das umlaufende Zugband zumindest in einem Förderbereich 5 der Förderanlage 1 mittels Rollen 8 beweglich gegenüber der Stützkonstruktion 43 gelagert ist.

Es ist weiters eine Sortieranlage mit wenigstens einer Förderanlage 1 vorgesehen.

Dadurch ergibt sich der Vorteil, dass eine Förderanlage 1 bereitgestellt werden kann, mit welcher längliches Stückgut 2 in Längstransportrichtung 7 umweltfreundlich und effizient transportiert werden kann. Durch die Kombination des wenigstens eines Zugelements 4 und der beweglichen Lagerung des umlaufenden Zugsbandes in dem Förderbereich 5 mittels Rollen 8 kann gänzlich auf den Einsatz einer Ölschmierung an freiliegenden Teilen der Förderanlage 1 verzichtet werden, wodurch auch der Wartungsaufwand der Förderanlage 1 und die laufenden Betriebskosten der Förderanlage 1 reduziert werden können. Dadurch kann auch kein Öl an dem Aufstellungsort der Förderanlage 1 in die Umwelt gelangen, wodurch eine Kontamination der Umwelt vermieden wird. Durch die bewegliche Lagerung des umlaufenden Zugbandes gegenüber der Stützkonstruktion 43 mittels Rollen 8 in dem Förderbereich 5 kann die Förderanlage 1 weiters mit einer geringeren Antriebsleistung als eine Förderanlage mit kettengeführten Mitnehmern betrieben werden, wobei dennoch die Fördergeschwindigkeit der Förderanlage 1 gegenüber einer kettenbetriebenen Förderanlage erhöht werden kann. Dadurch, dass jeder Auflager 3 an zumindest zwei voneinander beabstandeten Befestigungspunkten 34 mit dem wenigstens einem Zugelement 4 befestigt ist, kann mittels einer möglichst einfachen Bauweise eine hohe Verwindungssteifigkeit des umlaufenden Zugbandes gegenüber Stößen und seitlich einwirkenden Kräften erreicht werden, wobei auf eine aufwendige Führung der Auflager 3 in dem Förderbereich 5 entlang der Längstransportrichtung 7 verzichtet werden kann. Durch die bewegliche Lagerung des umlaufenden Zugbandes in dem Förderbereich 5 mittels Rollen 8 ergibt sich weiters auch der Vorteil, dass die Lärmbelastung der Förderanlage 1 bei einem Förderprozess im Gegensatz zu einer Förderanlage mit kettengeführten Mitnehmern deutlich reduziert wird, wodurch Anrainer sowie Arbeiter, welche in der Nähe einer derartigen Förderanlage 1 wohnen bzw. arbeiten, einer deutlich reduzierteren Lärmbelastung als bei kettengeführten Förderanlagen ausgesetzt sind. Weiters kann durch die bewegliche Lagerung des umlaufenden Zugbandes mittels Rollen 8 in dem Förderbereich 5 auch die Reibung zwischen dem umlaufenden Zugband und der Stützkonstruktion 43 gegenüber einer Förderanlage mit kettengeführten Mitnehmern reduziert werden, wodurch sich die Lebenszeit der Förderanlage 1 gegenüber bisher bekannten Förderanlagen verlängert und Energiekosten zum Betreiben der Förderanlage 1 reduziert werden. Durch die Kombination des wenigstens einen Zugelements 4 und der Rollen 8 ergibt sich noch ein weiterer Synergieeffekt, wodurch die Wartung sowie der Aufbau der Förderanlage 1 deutlich erleichtert wird. Dadurch können auch schon in einer Produktionsanlage Teile der Förderanlage 1 in eine Liefereinheit eingebaut werden, wodurch in vorteilhafterweise auch Teile der Förderanlage 1 gegenüber einer Förderanlage mit kettengeführten Mitnehmern erleichtert ausgetauscht werden können.

Die Förderanlage 1 ist eine Vorrichtung, welche dazu ausgebildet ist längliches Stückgut 2 in Längstransportrichtung 7 zu transportieren.

Als längliches Stückgut 2 ist jede Art von Stückgut zu verstehen, welches ein längliches Ausmaß aufweist. Dabei ist bevorzugt eine erste Seite des länglichen Stückgutes 2, welche sich entlang der Längstransportrichtung 7 erstreckt, länger als eine zweite quer zur Längstransportrichtung 7 angeordnete Seite des länglichen Stückgutes 2.

Bevorzugt ist das längliche Stückgut 2 aus Holz.

Besonders bevorzugt ist das längliche Stückgut 2 ein längliches Holzstück.

Alternativ kann das längliche Stückgut 2 auch aus einem Polymer und/oder einem Metall sein.

Bevorzugt umfasst das längliche Stückgut 2 Bretter, Latten, Leisten und/oder Balken.

Besonders bevorzugt umfasst das längliche Stückgut 2 Holzbretter, Holzlatten, Holzleisten, Holzbalken und/oder Rundhölzer.

Es ist vorgesehen, dass die Förderanlage 1 ein umlaufenden Zugband und eine Stützkonstruktion 43 für das umlaufende Zugband umfasst. Ein Zugband ist insbesondere ein waagerechtes, auf Zug beanspruchtes Bauteil. Dabei ist vorgesehen, dass die Stützkonstruktion 43 das umlaufende Zugband abstützt bzw. in Position haltet.

Bevorzugt ist vorgesehen, dass das längliche Stückgut 2 auf den Auflagern 3 aufgelegt in Längstransportrichtung 7 transportiert wird.

Bevorzugt kann vorgesehen sein, dass das längliche Stückgut 2 mittels einer Vielzahl beweglich gelagerter Auflager 3 in Längstransportrichtung 7 transportiert wird.

Die Auflager 3 können bevorzugt auch als Mitnehmer bezeichnet werden.

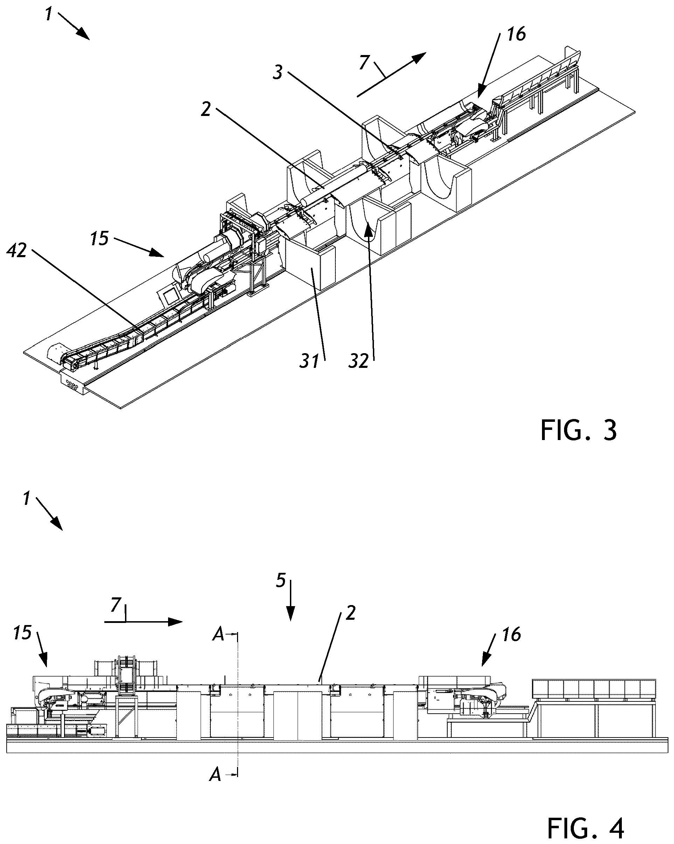

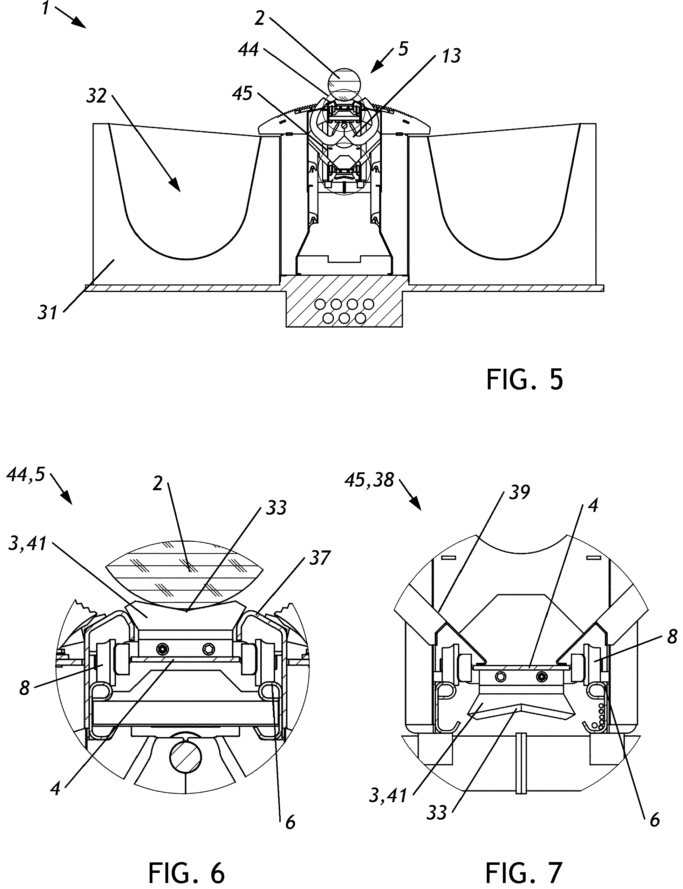

Insbesondere ist die Längstransportrichtung 7 die Richtung, entlang welcher das längliche Stückgut 2 von der Förderanlage 1 gefördert bzw. transportiert wird. Besonders bevorzugt kann die Längstransportrichtung 7 auch als Fördertransportrichtung bezeichnet werden. In den Fig. 3 und Fig. 4 ist beispielsweise in der ersten bevorzugten Ausführungsform der Förderanlage 1 das längliche Stückgut 2 bei der Förderung in die Längstransportrichtung 7 gezeigt. Dabei ist in Fig. 3 die erste bevorzugte Ausführungsform der Förderanlage 1 in axonometrischer Darstellung und in Fig. 4 die erste bevorzugte Ausführungsform der Förderanlage 1 in Seitenansicht gezeigt. Weiters ist in Fig. 4 die Schnittlinie A-A eingezeichnet, welche Schnittlinie A-A einen Schnitt senkrecht zur Längstransportrichtung 7 kennzeichnet. In der Fig. 5 ist der Schnitt A-A der in der Fig. 4 eingezeichneten Schnittlinie A-A dargestellten. In Fig. 5 ist beispielsweise die erste bevorzugte Ausführungsform der Förderanlage 1 gezeigt, wobei ein längliches Stückgut 2 in dem Förderbereich 5 in Längstransportrichtung 7 transportiert wird.

Bevorzugt liegt das längliche Stückgut 2 in dem Förderbereich 5 auf zumindest zwei Auflager 3 auf. In Fig. 6 ist beispielsweise das erste Detail aus Fig. 5 der ersten bevorzugten Ausführungsform der Förderanlage 1 gezeigt, wobei ein längliches Stückgut 2 in dem Förderbereich 5 in Längstransportrichtung 7 transportiert wird.

Es kann bevorzugt vorgesehen sein, dass die Auflager 3 beweglich gelagert sind.

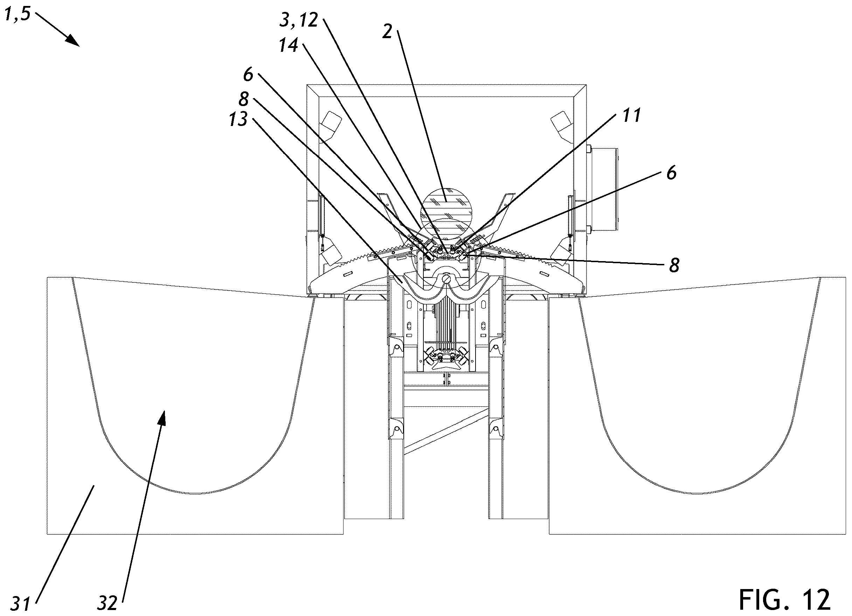

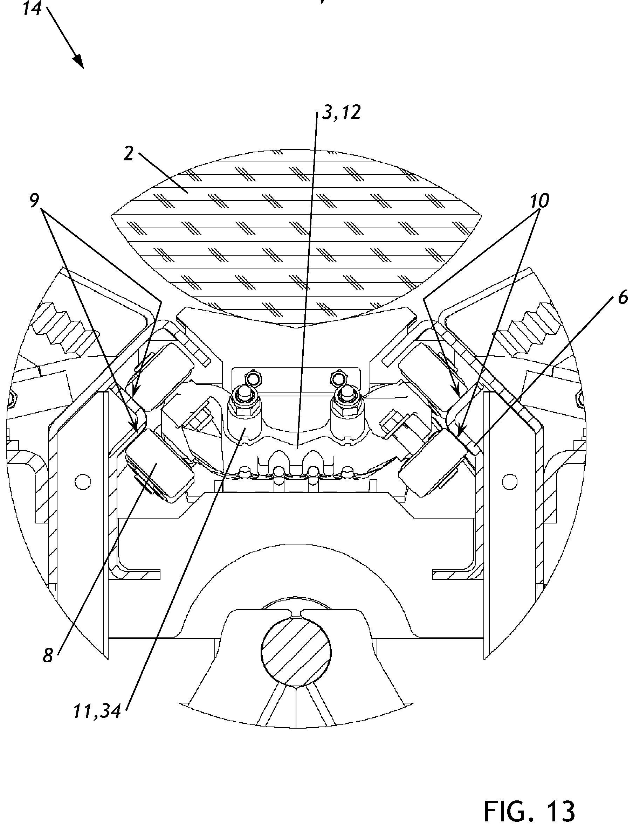

Bevorzugt weist der Auflager 3, insbesondere wenigstens ein Teil der Vielzahl der beweglich gelagerten Auflager 3, sechs Seiten auf, wobei eine Oberseite des Auflagers 3 die Vertiefung 33 für das wenigstens eine längliche Stückgut 2 aufweist, wobei eine Unterseite des Auflagers 3 gegenüberliegend und beabstandet zu der Oberseite des Auflagers 3 angeordnet ist, wobei eine Vorderseite des Auflagers 3 in der Längstransportrichtung 7 angeordnet ist, wobei eine Rückseite des Auflagers 3 gegenüberliegend und beabstandet zu der Vorderseite des Auflagers 3 angeordnet ist, wobei jeweils eine Schmalseite des Auflagers 3 orthogonal zur Längstransportrichtung 7 angeordnet ist. In Fig. 13 ist beispielhaft ein Detail aus Fig. 12 der zweiten bevorzugten Ausführungsform der Förderanlage 1 zum Längstransport von länglichem Stückgut gezeigt, wobei die bewegliche Lagerung eines Auflagers 3 mittels Rollen 8 gezeigt ist.

Bevorzugt kann vorgesehen sein, dass an der Vorderseite des Auflagers 3 eine erste Stirnseite des Auflagers 3 angeordnet ist.

Bevorzugt kann vorgesehen sein, dass an der Rückseite des Auflagers 3 eine zweite Stirnseite des Auflagers 3 angeordnet ist.

Es ist vorgesehen, dass jedes der Auflager 3 einen Grundkörper, insbesondere einen Stahlgrundkörper, umfasst. Dabei kann der Grundkörper, insbesondere der Stahlgrundkörper, bevorzugt als Schweißkonstruktion ausgebildet sein.

Es ist vorgesehen, dass jedes der Auflager 3 eine Vertiefung 33 für das längliche Stückgut 2 aufweist. Dabei ist bevorzugt vorgesehen, dass die Vertiefung 33 derart ausgebildet ist, dass das längliche Stückgut 2 bei dem Transport des länglichen Stückguts 2 in Längstransportrichtung 7 nicht seitlich von den Auflagern 3 rutscht oder rollt.

Jedes der Auflager 3 umfasst eine Auflageeinheit 41 für das längliche Stückgut 2, wobei die Auflageeinheit 41 die Vertiefung 33 für das längliche Stückgut 2 aufweist. Insbesondere kann die Vertiefung 33 für das längliche Stückgut 2 als V-Form ausgebildet sein.

Bevorzugt kann die Auflageeinheit 41 aus einem Polymer, insbesondere Kunststoff, und/oder aus einem Metall ausgebildet sein. Einer fachkundigen Person sind die zur Verwendung als Auflageeinheit 41 verwendbaren Polymere und/oder Metalle bekannt, weshalb an dieser Stelle von einer Aufzählung der als Auflageeinheit 41 verwendbaren Polymere bzw. Metalle abgesehen wird.

Bevorzugt kann vorgesehen sein, dass jede Auflageeinheit 41 der Auflager 3 mit dem Grundkörper der Auflager 3 formschlüssig verbunden ist.

Es ist vorgesehen, dass jede Auflageeinheit 41 an dem Grundkörper jedes Auflagers 3, insbesondere an dem Stahlgrundkörper jedes Auflagers 3, befestigt ist. Dabei kann jede Auflageeinheit 41 bevorzugt mittels Schrauben an dem Grundkörper, insbesondere an dem Stahlgrundkörper, jedes Auflagers 3 befestigt sein.

Bevorzugt kann eine Oberseite der Auflageeinheit 41 die Vertiefung 33 für das längliche Stückgut 2 aufweisen. Bevorzugt kann eine Unterseite der Auflageeinheit 41 mit dem umlaufenden Zugband verbunden sein. Bevorzugt kann vorgesehen sein, dass der Grundkörper des Auflagers 3 und die Unterseite der Auflageeinheit 41 des Auflagers 3 mit dem umlaufenden Zugband verbunden sind. Dadurch ergibt sich insbesondere mit der Befestigung der Auflagereinheit 41 an dem Grundkörper des Auflagers 3 der Vorteil, dass der Auflager 3 mittels einer breiten Auflagefläche am umlaufenden Zugband verbunden ist, wodurch insbesondere einer Verdrehung des umlaufenden Zugbandes bei einem Auflegen und/oder einem Abwerfen des länglichen Stückguts 2 effektiv entgegengewirkt werden kann.

Bevorzugt kann vorgesehen sein, dass die Vertiefung 33 zum Auflegen des länglichen Stückguts 2 direkt an dem Auflager 3 ausgebildet ist. Dabei kann insbesondere vorgesehen sein, dass das Auflager 3 einteilig ausgebildet ist.

Es ist vorgesehen, dass die Auflager 3 mittels wenigstens eines Zugelements 4 zu einem umlaufenden Zugband verbunden sind.

Es ist vorgesehen, dass jedes der Auflager 3 an zumindest zwei voneinander beabstandeten Befestigungspunkten 34 mit dem wenigstens einen Zugelement 4 befestigt sind. Dadurch ergibt sich der Vorteil, dass mittels einer möglichst einfachen Bauweise eine hohe Verwindungssteifigkeit des umlaufenden Zugbandes gegenüber Stößen und seitlich einwirkenden Kräften erreicht werden kann, wobei auf eine aufwendige Führung sowie Ausrichtung der Auflager 3 in dem Förderbereich 5 entlang der Längstransportrichtung 7 verzichtet werden kann. In der Fig. 13 sind die zumindest zwei voneinander beabstandeten Befestigungspunkte 34 an der zweiten bevorzugten Ausführungsform der Förderanlage 1 gezeigt, wobei die zumindest zwei voneinander beabstandeten Befestigungspunkte 34 für die erste bevorzugte Ausführungsform der Förderanlage 1 in den Fig. 1 bis 10 nicht ersichtlich sind.

Bevorzugt kann vorgesehen sein, dass die zumindest zwei voneinander beabstandeten Befestigungspunkte 34 einen vordefinierten Abstand zueinander aufweisen. Bevorzugt kann vorgesehen sein, dass die zumindest zwei voneinander beabstandeten Befestigungspunkte 34 in vorgebaren Abständen zueinander angeordnet sind. Dabei ist insbesondere vorgesehen, dass zwei erste zumindest zwei voneinander beabstandeten Befestigungspunkte 34 in einem vorgebbaren Abstand zu zwei zweite zumindest zwei voneinander beabstandeten Befestigungspunkte 34 angeordnet sind. Dadurch ergibt sich der Vorteil, dass die Förderanlage 1 individuell an die Länge des zu transportierenden länglichen Stückguts 2 angepasst werden kann.

Bevorzugt kann vorgesehen sein, dass die zumindest zwei voneinander beabstandeten Befestigungspunkte 34 an den Auflagern 3 angeordnet sind. In der Fig. 13 ist die Anordnung der zwei voneinander beabstandeten Befestigungspunkte 34 in der zweiten bevorzugten Ausführungsform der Förderanlage 1 gezeigt.

Bevorzugt kann vorgesehen sein, dass die zumindest zwei voneinander beabstandeten Befestigungspunkte 34 an dem wenigsten einen Zugelement 4 angeordnet sind.

Bevorzugt kann vorgesehen sein, dass eine Verbindungslinie durch die zumindest zwei Befestigungspunkte 34 quer, insbesondere orthogonal, zu der Längstransportrichtung 7 der Förderanlage 1 angeordnet ist. Dadurch ergibt sich insbesondere der Vorteil, dass eine besonders verwindungssteife Montage der Auflager 3 an dem wenigstens einen Zugelement 4 erreicht werden kann. Dadurch kann insbesondere bei einem Auflegen des länglichen Stückguts 2 auf die Auflager 3 oder bei einem Abwerfen des länglichen Stückgutes 2 von den Auflagern 3 das umlaufende Zugband vor hohen seitlich einwirkenden Kräften geschützt werden. Dadurch kann weiters in vorteilhafterweise bei einer Beschädigung eines Auflagers 3 einfach und schnell lediglich das beschädigte Auflager 3 ausgetauscht werden.

Es kann bevorzugt vorgesehen sein, dass das wenigstens eine Zugelement 4 wenigstens ein Zugseil umfasst. Dabei kann insbesondere vorgesehen sein, dass mehrere Zugseile parallel zueinander angeordnet sind. Insbesondere kann vorgesehen sein, dass zwei Zugseile parallel zueinander angeordnet sind. Dabei kann insbesondere vorgesehen sein, dass die parallel zueinander angeordneten Zugseile in Längstransportrichtung 7 angeordnet sind. Dabei kann insbesondere vorgesehen sein, dass mehrere Auflager 3 mittels der parallel zueinander angeordneten Zugseile zu einem umlaufenden Zugband verbunden sind.

Es kann besonders bevorzugt vorgesehen sein, dass das wenigstens eine Zugelement 4 als ein Zugseil ausgebildet ist.

Besonders bevorzugt kann vorgesehen sein, dass das wenigstens eine Zugelement 4 als ein Gurt ausgebildet ist. Insbesondere kann der Gurt auch als Gurtband oder Elevatorgurt bezeichnet werden. Dadurch ergibt sich insbesondere der Vorteil, dass Schmutz, wie Holzstücke, mittels des Gurts aus dem Förderbereich 5 transportiert werden können. Weiters ergibt sich dadurch der Vorteil, dass durch die Ausbildung des wenigstens einen Zugelements 4 als Gurt eine hohe Verwindungssteifigkeit des umlaufenden Zugbandes erreicht wird. Dadurch kann insbesondere bei einem Auflegen oder Abwerfen des länglichen Stückgutes 2 von der Förderanlage 1 ein Verwinden des umlaufenden Zugbandes vermieden werden.

Besonders bevorzugt kann bei der Ausbildung des wenigstens einen Zugelements 4 als Gurt vorgesehen sein, dass der Gurt breiter als das längliche Stückgut 2 ist.

Bevorzugt kann vorgesehen sein, dass das wenigstens eine Zugelement 4 aus einem Verbundwerkstoff ausgebildet ist. Dadurch ergibt sich der Vorteil, dass eine höhere Verschleißbeständigkeit als bei einem herkömmlichen Gurt erreicht werden kann. Weiters ergibt sich dadurch der Vorteil, dass die Gurtspannung bei der Förderanlage 1 auch über längere Betriebszeiten der Förderanlage 1 konstant gehalten werden kann, da dadurch die Dehnung des Gurts reduziert wird. Dadurch kann weiters der Ausbreitung von Rissen im Gurt effektiv entgegengewirkt werden.

Bevorzugt kann vorgesehen sein, dass der Gurt, insbesondere der Elevatorgurt, ein Stahlseil umfasst. Insbesondere kann der Gurt, insbesondere der Elevatorgurt, eine Stahlseil-Karkasse umfassen. Dabei kann insbesondere vorgesehen sein, dass das Stahlseil oder die Stahlseil-Karkasse innerhalb des Gurts angeordnet sind. Insbesondere können das Stahlseil oder die Stahlseil-Karkasse in dem Gurt eingebettet sein. Die Stahlseil-Karkasse kann bevorzugt erste Karkassenstahlseile in Längstransportrichtung 7 und zweite Karkassenstahlseile quer zur Längstransportrichtung 7 umfassen, wobei die Querschnittsfläche der ersten Karkassenstahlseile größer sein kann, als die Querschnittsfläche der zweiten Karkassenstahlseile. Dadurch können in vorteilhafterweise die Festigkeit und die Steifigkeit, insbesondere die Stoßfestigkeit, des Gurts erhöht werden, da die Karkasse das tragendende Gerüst des Gurts ist.

Besonders bevorzugt kann vorgesehen sein, dass jedes der Auflager 3 an dem Gurt, insbesondere dem Elevatorgurt, befestigt ist. Dabei kann bevorzugt vorgesehen sein, dass jedes der Auflager 3 mittels Schrauben, insbesondere mittels Elevatorschrauben, an dem Gurt befestigt ist. Insbesondere kann vorgesehen sein, dass jedes der Auflager 3 an den zumindest zwei voneinander beabstandeten Befestigungspunkten 34 mit dem Gurt befestigt ist.

Bevorzugt kann vorgesehen sein, dass das wenigstens eine Zugelement 4 aus Segmenten 35 ausgebildet ist, welche Segmente 35 mittels eines Verbinders 36 miteinander lösbar gekoppelt sind. Dadurch ergibt sich der Vorteil, dass auf ein bauseitiges Vulkanisieren verzichtet werden kann, dass beschädigte Komponenten einfach ausgetauscht werden können und dass eine flexible Bauweise für unterschiedlich große Förderanlagen 1 erreicht werden kann. Dadurch können weiters hohe Wartungskosten vermieden werden, weil lediglich das beschädigte Segment oder die beschädigten Segmente 35 ausgetauscht werden müssen. In Fig. 2 ist beispielsweise ein Detail der ersten bevorzugten Ausführungsform der Förderanlage 1 in axonometrischer Darstellung gezeigt, wobei in dem Förderbereich 5 drei Segmente 35 des wenigstens eines Zugelements 4 gezeigt sind, welche mittels zwei Verbinder 36 miteinander lösbar gekoppelt sind.

Bevorzugt kann vorgesehen sein, dass der Verbinder 36 aus einem Metall, insbesondere aus Aluminium, ausgebildet ist.

Bevorzugt kann vorgesehen sein, dass der Verbinder 36 aus mehrere Teile besteht.

Es kann insbesondere vorgesehen sein, dass die beweglich gelagerten Auflager 3 mittels wenigstens eines Zugseiles 4 zu einem umlaufenden Zugband verbunden sind. Dabei kann insbesondere vorgesehen sein, dass das umlaufende Zugband durch die mit dem wenigstens einen Zugelement 4 verbundenen Auflager 3 ausgebildet wird.

Bevorzugt ist das umlaufende Zugband geschlossen.

Es ist vorgesehen, dass das umlaufende Zugband zumindest in dem Förderbereich 5 der Förderanlage 1 mittels Rollen 8 beweglich gegenüber der Stützkonstruktion 43 gelagert ist.

Die Rollen 8 können insbesondere auch als Laufrollen bezeichnet werden.

Bevorzugt kann vorgesehen sein, dass die Rollen 8 zur beweglichen Lagerung des umlaufenden Zugbandes gegenüber der Stützkonstruktion 43 an dem umlaufenden Zugband angeordnet sind. Dadurch kann eine sichere Führung des umlaufenden Zugbandes erreicht werden, wobei ein Abgleiten des umlaufenden Zugbandes von der Stützkonstruktion 43 verhindert werden kann. In Fig. 6 das erste Detail aus Fig. 5 gezeigt, wobei beispielsweise in der erste bevorzugte Ausführungsform der Förderanlage 1 eine Ausführungsform der beweglichen Lagerung des umlaufenden Zugbandes gegenüber der Stützkonstruktion 43 gezeigt ist.

Bevorzugt kann vorgesehen sein, dass jedes der Auflager 3 zumindest zwei Rollen 8 zur beweglichen Lagerung des umlaufenden Zugbandes gegenüber der Stützkonstruktion 43 umfasst. Dadurch ergibt sich der Vorteil, dass die Auflager 3 mittels der zumindest zwei Rollen 8 vorgebbar geführt werden können. Dadurch kann auch in vorteilhafterweise ein Durchhängen des umlaufenden Zugbandes bei dem Transport des länglichen Stückguts 2 verhindert werden, da das Auflager 3, welches das längliche Stückgut 2 in dem Förderbereich 5 trägt bzw. transportiert, über die zumindest zwei Rollen 8 beweglich gegenüber der Stützkonstruktion 43 gelagert ist. Dadurch kann eine sichere Führung des umlaufenden Zugbandes erreicht werden, wobei ein Abgleiten des umlaufenden Zugbandes von der Stützkonstruktion 43 verhindert werden kann.

Besonders bevorzugt kann vorgesehen sein, dass jedes der Auflager 3 lediglich zwei Rollen 8 zur beweglichen Lagerung des umlaufenden Zugbandes gegenüber der Stützkonstruktion 43 umfasst.

Besonders bevorzugt kann vorgesehen sein, dass die zumindest zwei Rollen 8 jedes Auflagers 3 zur beweglichen Lagerung des umlaufenden Zugbandes gegenüber der Stützkonstruktion 43 in dem Förderbereich 5 in zumindest einer Führungsschiene 6, insbesondere zwei Führungsschienen 6, in Längstransportrichtung 7 geführt sind. Insbesondere kann jeweils eine Rolle 8 der zumindest zwei Rollen 8 jedes Auflagers 3 zur beweglichen Lagerung des umlaufenden Zugbandes gegenüber der Stützkonstruktion 43 in dem Förderbereich 5 in zumindest einer Führungsschiene 6 geführt sein.

Besonders bevorzugt kann vorgesehen sein, dass die lediglich zwei Rollen 8 jedes Auflagers 3 zur beweglichen Lagerung des umlaufenden Zugbandes gegenüber der Stützkonstruktion 43 in dem Förderbereich 5 in zumindest einer Führungsschiene 6, insbesondere zwei Führungsschienen 6, in Längstransportrichtung 7 geführt sind. Dadurch ergibt sich insbesondere in Kombination mit der Befestigung jedes der Auflager 3 mittels der zumindest zwei voneinander beabstandeten Befestigungspunkten 34 der Vorteil, dass besonders einfach und schnell ein verwindungssteifer Aufbau des umlaufenden Zugbandes erreicht werden kann.

Bevorzugt kann vorgesehen sein, dass der Grundkörper des Auflagers 3, insbesondere an den Schmalseiten des Auflagers 3, Fortsätze für die Rollen umfasst. Insbesondere können die Rollen 8 formschlüssig mit dem Grundkörper des Auflagers 3 verbunden sein. Insbesondere können die Rollen an den Schmalseiten des Auflagers 3 angeordnet sein. Dabei kann insbesondere vorgesehen sein, dass die Rollen 8 an den Schmalseiten der Auflager 3 in Flucht angeordnet sind. Insbesondere kann vorgesehen sein, dass die Rollen 8 an den Schmalseiten des Auflagers 3 in zumindest zwei Führungsschienen 6, insbesondere in jeweils einer Führungsschiene 6, geführt sind.

Insbesondere kann die Breite des umlaufenden Zugbandes durch Breite des Auflagers 3 und/oder durch die an dem Auflager 3 angeordneten Rollen 8 begrenzt sein. Die Breite des Auflagers 3 kann insbesondere die Länge zwischen den beiden Schmalseiten des Auflagers 3 sein.

Besonders bevorzugt kann vorgesehen sein, dass wenigstens zwei Auflager 3 der Vielzahl der Auflager 3 mittels wenigstens eines Zugelements 4, insbesondere mittels wenigstens eines Zugseiles, miteinander verbunden sind. Besonders bevorzugt kann vorgesehen sein, dass wenigstens zwei Auflager 3 der Vielzahl der Auflager 3 mittels wenigstens zwei Zugelementen, insbesondere mittels wenigstens zwei Zugseilen, miteinander verbunden sind. Besonders bevorzugt kann vorgesehen sein, dass wenigstens zwei Auflager 3 mittels lediglich zwei Zugseilen 4 miteinander verbunden sind.

Besonders bevorzugt kann vorgesehen sein, dass jedes der Auflager 3 mit wenigstens einem Zugelement 4, insbesondere einem Zugseil, verbunden ist.

Insbesondere kann vorgesehen sein, dass jedes der Auflager 3 mit zumindest zwei anderen Auflagern 3 verbunden ist. Bevorzugt kann vorgesehen sein, dass der Abstand zwischen zwei Auflagern 3 durch die Länge des wenigstens einem Zugelements 4, insbesondere des wenigsten eines Zugseiles, zwischen zwei Auflagern 3 bestimmt ist.

Besonders bevorzugt kann der Abstand zwischen wenigstens einem Teil der Auflager 3 gleich groß sein. Insbesondere kann der Abstand zwischen allen Auflagern 3 gleich groß sein. Dadurch ergibt sich der Vorteil, dass bei der Förderanlage 1 der Abstand zwischen den Auflagern 3 individuell an die Länge des zu transportierenden längliche Stückgut 2 angepasst werden kann.

Bevorzugt kann vorgesehen sein, dass im Betriebszustand der Förderanlage 1 das wenigstens eine Zugelement 4 im Förderbereich 5 unter Zug steht und/oder gespannt ist.

Besonders bevorzugt kann, wenn das wenigstens eine Zugelements 4 als Zugseil ausgebildet ist, das wenigstens eine Zugseil 4 mittels eines Kreuzschlags des Seiles ausgebildet sein. Dabei kann der Kreuzschlag des Seiles auch als Gegenschlag bezeichnet werden.

Alternativ kann, wenn das wenigstens eine Zugelements 4 als Zugseil ausgebildet ist, das wenigstens eine Zugseil 4 mittels eines Gleichschlags des Seiles ausgebildet sein.

Besonders bevorzugt kann vorgesehen sein, dass im Betriebszustand der Förderanlage 1 lediglich im Förderbereich 5 das wenigstens eine Zugelement 4 unter Zug steht und/oder gespannt ist.

Insbesondere kann vorgesehen sein, dass das umlaufende Zugband einen Rückführbereich 38 umfasst, welcher gegenüberliegend und beabstandet zu dem Förderbereich 5 angeordnet ist.

Bevorzugt kann vorgesehen sein, dass die Förderanlage 1 einen Rückführbereich 38 umfasst, welcher gegenüberliegend und beabstandet zu dem Förderbereich 5 angeordnet ist und dass die Förderanlage 1 eine Schmutzführung 39 zum Umleiten von Schmutz aus den Förderbereich 5 in den Rückführbereich 38 umfasst. Dabei ist die Schmutzführung 39 bevorzugt dazu vorgesehen, Schmutz über die Schmutzführung 39 aus dem Förderbereich 5 in den Rückführbereich 38 umzuleiten. Dadurch ergibt sich der Vorteil, dass Schmutz, beispielsweise kleine Bruchstücke oder Rindenreste, wie bei einer Rutsche, einfach und schnell aus dem Förderbereich 5 transportiert werden können. Dadurch ergibt sich weiters ein Synergieeffekt mit der beweglichen Lagerung des umlaufenden Zugbandes mittels Rollen 8, wodurch die Förderanlage 1 deutlich weniger Wartungs- und Reinigungsarbeiten als eine herkömmliche Förderanlage mit kettengeführten Mitnehmern benötigt. In Fig. 2 ist beispielhaft die Schmutzführung 39 in der ersten bevorzugten Ausführungsform der Förderanlage 1 ersichtlich. In Fig. 7 ist der in Fig. 5 mit dem Bezugszeichen 45 gekennzeichnete Bildausschnitt der ersten bevorzugten Ausführungsform der Förderanlage 1 gezeigt. Dabei ist in Fig. 7 beispielhaft die Schmutzführung 39 in dem Rückführbereich 38 der Förderanlage 1 ersichtlich.

Insbesondere kann die Schmutzführung 39 aus einem Metall ausgebildet sein.

Insbesondere kann die Schmutzführung 39 gebogen und/oder gerade Flächen aufweisen.

Besonders bevorzugt kann die Schmutzführung 39 derart geformt sein, dass Schmutz aus dem Förderbereich 5 in den Rückführbereich 38 leitbar ist.

Besonders bevorzugt kann die Schmutzführung 39 an der Stützkonstruktion 43 befestigt sein.

Besonders bevorzugt kann bei der Ausbildung des wenigstens einen Zugelements 4 als Gurt vorgesehen sein, dass der Gurt eine Oberseite aufweist, an welcher Oberseite des Gurts die Auflager 3 für das längliche Stückgut befestigt sind. Dabei kann weiters bevorzugt vorgesehen sein, dass der Gurt eine Unterseite aufweist, welche gegenüberliegende und beabstandete zu der Unterseite des Gurts angeordnet ist. Dabei kann insbesondere vorgesehen sein, dass Schmutz aus dem Förderbereich 5 über die Schmutzführung 39 auf die Unterseite des Gurts leitbar ist.

Besonders bevorzugt kann der Rückführbereich 38 im Betriebszustand der Förderanlage 1 unterhalb des Förderbereiches 5 angeordnet sein.

Bevorzugt kann vorgesehen sein, dass im Betriebszustand der Förderanlage 1 das wenigstens eine Zugelement 4 im Rückführbereich 38 unter Zug steht und/oder gespannt ist.

Bevorzugt kann vorgesehen sein, dass die Vielzahl der beweglich gelagerten Auflager 3 in dem Rückführbereich 38 entgegen der Längstransportrichtung 7 geführt werden.

Insbesondere kann vorgesehen sein, dass die Förderanlage 1 eine Längserstreckung in Längstransportrichtung 7 aufweist, wobei zwei Transportrichtungsänderungsbereiche 15, 16 die Förderanlage 1 in deren Längserstreckung begrenzen.

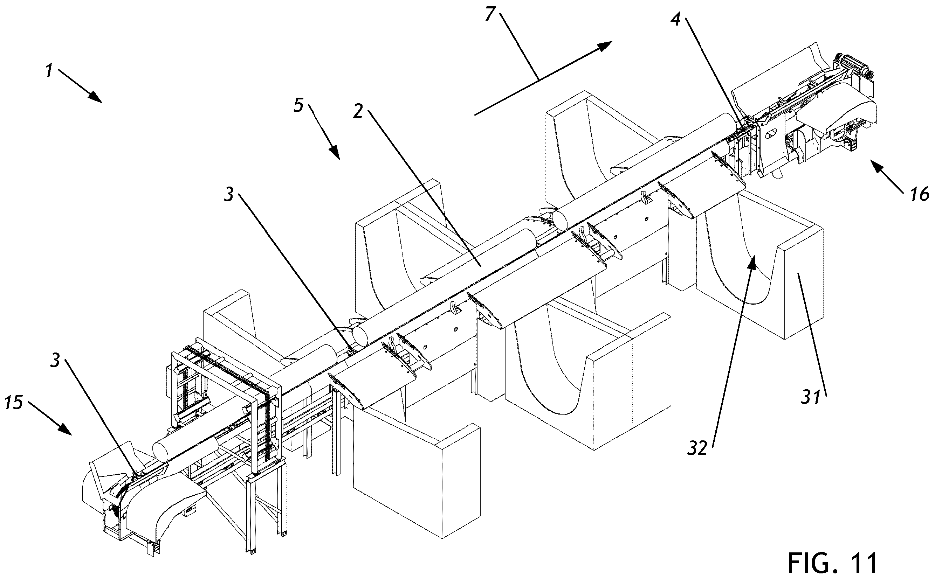

Insbesondere kann vorgesehen sein, dass ein erster Transportrichtungsänderungsbereich 15 der Förderanlage 1 an einem ersten Endbereich der Förderanlage 1 abgeordnet ist und ein zweiter Transportrichtungsänderungsbereich 16 der Förderanlage 1 an einem zweiten Endbereich der Förderanlage 1 angeordnet ist, wobei der zweite Endbereich der Förderanlage 1 gegenüberliegend und beabstandet zu dem ersten Endbereich der Förderanlage 1 angeordnet ist. Bevorzugt ist die Förderanlage 1 durch den ersten Transportrichtungsänderungsbereich 15 und/oder den zweiten Transportrichtungsänderungsbereich 16 in deren länglichen Erstreckung begrenzt. In den Fig. 1 und Fig. 11 ist der erste Transportrichtungsänderungsbereich 15 an dem ersten Endbereich der Förderanlage 1 und der zweite Transportrichtungsänderungsbereich 16 an dem zweiten Endbereich der Förderanlage 1 an der ersten und an der zweiten bevorzugten Ausführungsform der Förderanlage 1 ersichtlich.

Bevorzugt umfassen der erste Transportrichtungsänderungsbereich 15 und der zweite Transportrichtungsänderungsbereich 16 eine erste und eine zweite Richtungsänderungsvorrichtung zum Ändern der Transportrichtung der Auflager 3, insbesondere der Vielzahl der beweglich gelagerten Auflager 3, an dem wenigstens einem Zugelement 4 von dem Förderbereich 5 in den Rückführbereich 38. Bei Betrachtung eines einzelnen Auflagers 3 bei der Vielzahl der beweglich gelagerten Auflager 3 wird das Auflager 3 derart entlang des umlaufenden Zugbandes geführt, dass das Auflager 3 bevorzugt an dem ersten Endbereich der Förderanlage nach der ersten Richtungsänderungsvorrichtung 1 in Längstransportrichtung 7 mit einem länglichen Stückgut 2 zumindest mittelbar in Kontakt gelangt. Insbesondere wird dabei das längliche Stückgut 2 in die Vertiefung 33 des Auflagers 3 aufgelegt. Nachfolgend wird bevorzugt das längliche Stückgut 2, insbesondere entlang der zumindest einen Führungsschiene 6, in dem Förderbereich 5 in Längstransportrichtung 7 transportiert. Bevorzugt kann vorgesehen sein, dass das längliche Stückgut bei dem Transport in dem Förderbereich 5 der Förderanlage 1 von dem Auflager 3 abgeworfen wird. Bevorzugt wird nach dem Transport des länglichen Stückgutes 2 das Auflager 3 bei dem zweiten Transportrichtungsänderungsbereich 16 an dem zweiten Endbereich der Förderanlage 1 mittels der zweiten Richtungsänderungsvorrichtung in den Rückführbereich 38 geführt. Nachfolgend wird das Auflager 3 bevorzugt entgegen der Förderrichtung zurückgeführt. Dadurch kann bevorzugt vorgesehen werden, dass das Auflager 3 wieder zum Fördern eines länglichen Stückgutes 2 verwendet werden kann, wenn das Auflager 3 durch die erste Richtungsänderungsvorrichtung in den Förderbereich 5 geführt wird.

Bevorzugt kann vorgesehen sein, dass die erste und/oder die zweite Richtungsänderungsvorrichtung zum Antreiben der Förderanlage 1 ausgebildet ist. Insbesondere kann die erste und/oder die zweite Richtungsänderungsvorrichtung dazu ausgebildet sein das umlaufende Zugband anzutreiben. Bevorzugt kann die erste und/oder die zweite Richtungsänderungsvorrichtung einen Motor zum Antreiben der Förderanlage 1 umfassen.

Insbesondere kann der Förderbereich 5 zwischen dem ersten Transportrichtungsänderungsbereich 15 und dem zweiten Transportrichtungsänderungsbereich 16 angeordnet sein. Bevorzugt kann das längliche Stückgut 2 in dem Förderbereich 5 der Förderanlage 1 transportiert werden. Bevorzugt kann die Vielzahl der Auflager 3 in dem Förderbereich 5 in Längstransportrichtung 7 transportiert werden.

Insbesondere kann der Rückführbereich 38 zwischen dem ersten Transportrichtungsänderungsbereich 15 und dem zweiten Transportrichtungsänderungsbereich 16 angeordnet sein. Bevorzugt kann die Vielzahl der Auflager 3 in dem Rückführbereich 38 entgegen der Längstransportrichtung 7 transportiert werden.

Bevorzugt kann an dem ersten Endbereich der Förderanlage 1 das längliche Stückgut 2 auf wenigstens zwei beweglich gelagerte Auflager 3 aufgelegt und mittels der wenigstens zwei beweglich gelagerten Auflager 3 zu dem zweiten Endbereich der Förderanlage 1 transportiert werden. Besonders bevorzugt kann das längliche Stückgut 2 auf die wenigstens zwei beweglich gelagerten Auflager 3 mit Hilfe einer Umlenkvorrichtung 17 einer Sortieranlage aufgelegt werden. Das Auflegen des länglichen Stückgutes 2 auf die wenigstens zwei beweglich gelagerten Auflager 3 kann auch bevorzugt als ein Übergeben des länglichen Stückgutes 2 von der Umlenkvorrichtung 17 der Sortieranlage an die Förderanlage 1 verstanden werden.

Bevorzugt umfasst das umlaufende Zugband den Förderbereich 5, den Rückführbereich 38 sowie den ersten Transportrichtungsänderungsbereich 15 und den zweiten Transportrichtungsänderungsbereich 16.

Es kann vorgesehen sein, dass die Förderanlage 1 in dem Förderbereich 5 zumindest eine Führungsschiene 6 in Längstransportrichtung 7 umfasst. Bevorzugt ist vorgesehen, dass die Förderanlage 1 in dem Förderbereich 5 zumindest zwei Führungsschienen 6 in Längstransportrichtung 7 umfasst. Insbesondere kann vorgesehen sein, dass die zumindest zwei Führungsschienen 6 der Förderanlage 1 gegenüberliegend und beabstandet zueinander angeordnet sind. In der Fig. 6 sind beispielsweise in der ersten bevorzugten Ausführungsform der Förderanlage 1 zwei gegenüberliegend und zueinander beabstandet angeordnete Führungsschienen 6 in dem Förderbereich 5 ersichtlich.

Insbesondere kann vorgesehen sein, dass die Rollen 8 in dem Förderbereich 5 in der zumindest einen Führungsschiene 6 geführt sind.

Insbesondere kann die zumindest eine Führungsschiene 6 Teil der Stützkonstruktion 43 sein.

Insbesondere kann die zumindest eine Führungsschiene 6 an der Stützkonstruktion 43 befestigt sein.

Bevorzugt kann vorgesehen sein, dass die Förderanlage 1 in dem Rückführbereich 38 zumindest eine Führungsschiene 6 zur Führung des Auflagers 3 entgegen der Längstransportrichtung 7 umfasst. Bevorzugt kann vorgesehen sein, dass in dem Rückführbereich 38 zwei gegenüberliegend und beabstandet zueinander angeordnete Führungsschienen 6 zur Führung des Auflagers 3 entgegen der Längstransportrichtung 7 angeordnet sind. In der Fig. 7 ist das zweite Detail aus Fig. 5 ersichtlich, wobei beispielsweise in der ersten bevorzugten Ausführungsform der Förderanlage 1 zwei gegenüberliegend und beabstandet zueinander angeordnete Führungsschienen 6 in dem Rückführbereich 38 ersichtlich sind.

Bevorzugt kann die zumindest eine Führungsschiene 6 aus Metall und/oder einer Metalllegierung und/oder aus einem Polymer, insbesondere einen Kunststoff, und/oder aus einem Verbundwerkstoff ausgebildet sein.

Bevorzugt kann die zumindest eine Führungsschiene 6 gerade ausgebildet sein.

Bevorzugt kann die zumindest eine Führungsschiene 6 zumindest teilweise in dem Förderbereich 5 angeordnet sein. Besonders bevorzugt erstreckt sich die zumindest eine Führungsschiene 6 entlang des Förderbereiches 5. Besonders bevorzugt erstreckt sich die zumindest eine Führungsschiene 6 von dem ersten Transportrichtungsänderungsbereich 15 bis zu dem zweiten Transportrichtungsänderungsbereich 16 entlang der Längstransportrichtung 7.

Es kann vorgesehen sein, dass jedes der Auflager 3 mit zumindest einer Rolle 8, insbesondere einer Laufrolle, entlang der zumindest einen Führungsschiene 6 geführt ist. Bevorzugt kann vorgesehen sein, dass an jeder Führungsschiene 6 zumindest eine Rolle 8, insbesondere eine Laufrolle, geführt ist. In Fig. 12 ist ein Schnitt senkrecht zur Längstransportrichtung 7 der in Fig. 11 dargestellten zweiten bevorzugten Ausführungsform der Förderanlage 1 ersichtlich, wobei die zumindest eine Rolle 8 und die zumindest eine Führungsschiene 6 ersichtlich sind. In Fig. 13 ist der in Fig. 12 mit dem Bezugszeichen 14 gekennzeichnete Bildausschnitt der zweiten bevorzugten Ausführungsform der Förderanlage 1 ersichtlich.

Bevorzugt kann die zumindest eine Rolle 8 aus einem Polymer, insbesondere aus einem Kunststoff und/oder einem Kautschuk, ausgebildet sein.

Insbesondere kann die zumindest eine Rolle 8 ein Schwerlast-Rad sein. Dabei kann jedes einzelne Schwerlast-Rad eine Tragfähigkeit von circa 500 kg umfassen.

Insbesondere kann die zumindest eine Rolle 8 aus Gusspolyamid ausgebildet sein.

Alternativ kann die zumindest eine Rolle 8 aus einem Metall, bevorzugt aus einer Metalllegierung, insbesondere aus Stahl, ausgebildet sein.

Insbesondere kann die zumindest eine Rolle 8 einen Spurkranz aufweisen. Insbesondere kann die zumindest eine Rolle 8 als Spurkranzrad ausgebildet sein.

Bevorzugt kann vorgesehen sein, dass das umlaufende Zugband zumindest in dem Förderbereich 5 der Förderanlage 1 kippsicher gelagert ist. Dadurch ergibt sich der Vorteil, dass das umlaufende Zugband bei einem Auflegen oder einem Abwerfen des länglichen Stückgutes 2 von dem Förderbereich 5 vor einer seitlich einwirkenden Kraft geschützt werden kann.

Es kann bevorzugt vorgesehen sein, dass jedes der Auflager 3 in dem Förderbereich 5 an der zumindest einen Führungsschiene 6 kippsicher gelagert ist.

Bevorzugt kann vorgesehen sein, dass in wenigstens einem Abschnitt des Förderbereichs 5 an der Förderanlage 1 eine Schutzabdeckung 37 für die Rollen 8 der beweglichen Lagerung des umlaufenden Zugbandes gegenüber der Stützkonstruktion 43 angeordnet ist. Dadurch ergibt sich der Vorteil, dass das umlaufende Zugband durch die Schutzabdeckung 37 kippsicher gelagert ist. Weiters können dadurch die Rollen 8 vor Verschmutzung und Beschädigungen geschützt werden, wodurch die Wartungsarbeiten an der Förderanlage 1 weiters reduziert werden können. In Fig. 6 ist der in Fig. 5 mit dem Bezugszeichen 44 gekennzeichnete Bildausschnitt der ersten bevorzugten Ausführungsform der Förderanlage 1 gezeigt. Dabei zeigt die Fig. 6 das erste Detail aus Fig. 5 der ersten bevorzugten Ausführungsform der Förderanlage 1, wobei die Schutzabdeckung 37 für die Rollen 8 beispielhaft gezeigt ist.

Bevorzugt kann die Schutzabdeckung 37 für die Rollen 8 an der Stützkonstruktion 43, insbesondere zerstörungsfrei lösbar, befestigt sein. Dadurch ergibt sich der Vorteil, dass Wartungsarbeiten an den Auflagern 3 und dem umlaufenden Zugband besonders einfach und schnell durchgeführt werden können.

Insbesondere kann vorgesehen sein, dass im Betriebszustand der Förderanlage 1 oberhalb der zumindest einen Führungsschiene 6 im Förderbereich 5 die Schutzabdeckung 37 angeordnet ist. Insbesondere kann vorgesehen sein, dass die Schutzabdeckung 37 Teil der zumindest einen Führungsschiene 6 ist. Bei der Verwendung von mehr als zumindest einer Führungsschiene 6 kann bevorzugt vorgesehen sein, dass oberhalb jeder Führungsschiene 6 im Förderbereich 5 eine Schutzabdeckung 37 angeordnet ist. Dadurch ergibt sich der Vorteil, dass die Führungsschiene 6 vor Verschmutzung geschützt werden kann.

Bevorzugt kann vorgesehen sein, dass die Auflager 3 voneinander beabstandet angeordnet sind. Insbesondere kann vorgesehen sein, dass die Auflager 3 mit einem vorgegebenen Abstand zueinander angeordnet sind. Insbesondere kann der Abstand der Auflager 3 zueinander von der zu transportierenden Länge des Stückguts 2 abhängen.

Bevorzugt kann vorgesehen sein, dass die zumindest eine Führungsschiene 6 entlang der Längstransportrichtung 7 zumindest vier Laufflächen 9, 10 umfasst, wobei bei wenigstens einem Teil der beweglich gelagerten Auflager 3 in dem Förderbereich 5 auf jeder Lauffläche 9, 10 zumindest eine Rolle 8 geführt ist. Dadurch ergibt sich der Vorteil, dass die Vielzahl der beweglich gelagerten Auflager 3 besonders effizient und kippsicher entlang der zumindest einen Führungsschiene 6 geführt werden kann.

Bevorzugt kann die zumindest eine Führungsschiene 6 einen im Wesentlichen kreisförmigen Querschnitt zum Führen der Rollen 8 der Auflager 3 aufweisen.

Bevorzugt kann vorgesehen sein, dass die zumindest vier Laufflächen 9, 10 durch die zumindest eine Führungsschiene 6 ausgebildet sind.

Besonders bevorzugt kann vorgesehen sein, dass die zumindest vier Laufflächen 9, 10 ein Teil der zumindest einen Führungsschiene 6 sind.

Alternativ kann vorgesehen sein, dass die zumindest vier Laufflächen 9, 10 mittelbar mit der zumindest einen Führungsschiene 6 verbunden sind.

Bevorzugt kann vorgesehen, dass zwei erste Laufflächen 9 der zumindest vier Laufflächen 9, 10 gegenüberliegend und beabstandet zu zwei zweiten Laufflächen 10 der zumindest vier Laufflächen 9, 10 angeordnet sind. Dadurch ergibt sich der Vorteil, dass die Vielzahl der beweglich gelagerten Auflager 3 besonders effizient und kippsicher entlang der zumindest einen Führungsschiene 6 geführt werden können.

Besonders bevorzugt kann vorgesehen sein, dass die zwei ersten Laufflächen 9 der zumindest vier Laufflächen 9, 10 ein erstes Paar Laufflächen 9 ausbilden und dass die zwei zweiten Laufflächen 10 der zumindest vier Laufflächen 9, 10 ein zweites Paar Laufflächen 10 ausbilden.

Besonders bevorzugt kann vorgesehen sein, dass die zwei ersten Laufflächen 9 bzw. das erste Paar Laufflächen 9 im Wesentlichen achsensymmetrisch zu den zwei zweiten Laufflächen 10 bzw. zu dem zweiten Paar Laufflächen 10 angeordnet sind.

Besonders bevorzugt kann vorgesehen sein, dass die zwei ersten Laufflächen 9 bzw. das erste Paar Laufflächen 9 den zwei zweiten Laufflächen 10 bzw. dem zweiten Paar Laufflächen 10 gegenüberliegend angeordnet ist.

Bevorzugt kann vorgesehen sein, dass die zwei ersten Laufflächen 9 und/oder die zwei zweiten Laufflächen 10 der zumindest vier Laufflächen 9, 10 zueinander in einem Winkel an der zumindest einen Führungsschiene 6 angeordnet sind. Dadurch ergibt sich der Vorteil, dass das Auflager 3 besonders kippsicher entlang der wenigstens einen Führungsschiene 6 in dem Förderbereich 5 geführt werden kann. In Fig. 13 ist beispielhaft die zweite bevorzugte Ausführungsform der Förderanlage 1 mit zwei ersten Laufflächen 9 und zwei zweiten Laufflächen 10 dargestellt, wobei die zwei ersten Laufflächen 9 zueinander in einem ersten Winkel an einer ersten Führungsschiene angeordnet sind, die zwei zweiten Laufflächen 10 zueinander in einem zweiten Winkel an einer zweiten Führungsschiene angeordnet sind und die Winkelweite des ersten Winkels der Winkelweite des zweiten Winkels entspricht.

Bevorzugt kann vorgesehen sein, dass der Winkel zwischen den zwei ersten Laufflächen 9 dem Winkel zwischen den zwei zweiten Laufflächen 10 entspricht.

Bevorzugt kann vorgesehen sein, dass die zwei ersten Laufflächen 9 durch den Winkel zwischen den zwei ersten Laufflächen 9 einen ersten Keil ausbilden. Bevorzugt kann vorgesehen sein, dass die zwei zweiten Laufflächen 10 durch den Winkel zwischen den zwei zweiten Laufflächen 10 einen zweiten Keil ausbilden. Besonders bevorzugt kann vorgesehen sein, dass die Spitze des ersten Keiles gegenüberliegend und beabstandet zu der Spitze des zweiten Keiles angeordnet ist.

Besonders bevorzugt kann vorgesehen sein, dass die zwei ersten Laufflächen 9 bzw. das erste Paar Laufflächen 9 und/oder die zwei zweiten Laufflächen 10 bzw. das zweite Paar Laufflächen 10 in einem Winkel kleiner gleich 170 Grad zueinander an der zumindest einen Führungsschiene 6 in dem Förderbereich 5 angeordnet sind.

Besonders bevorzugt kann vorgesehen sein, dass die zwei ersten Laufflächen 9 bzw. das erste Paar Laufflächen 9 und/oder die zwei zweiten Laufflächen 10 bzw. das zweite Paar Laufflächen 9 im Wesentlichen im rechten Winkel zueinander an der zumindest einen Führungsschiene 6 angeordnet sind. Dadurch ergibt sich der Vorteil, dass das Auflager 3 besonders kippsicher entlang der wenigstens einen Führungsschiene 6 in dem Förderbereich 5 geführt werden kann.

Bevorzugt kann vorgesehen sein, dass jedes der Auflager 3 zumindest eine Verbindungsvorrichtung 11 zur Befestigung des wenigstens einen Zugelements 4 aufweist. Besonders bevorzugt kann jedes der Auflager 3 über die zumindest eine Verbindungsvorrichtung 11 an dem wenigstens einen Zugelement 4 befestigt sein. Dadurch ergibt sich der Vorteil, dass bei einem Wartungsfall eines Auflagers 3 der betreffende Auflager 3 schnell und einfach ausgetauscht werden kann. In Fig. 13 ist eine Detailansicht der in Fig. 12 gezeigten Ausführungsform der Förderanlage 1 gezeigt, wobei ein Auflager 3 mit zwei Verbindungsvorrichtungen 11 zur Befestigung von zwei Zugelementen 4 gezeigt ist.

Besonders bevorzugt kann die zumindest eine Verbindungsvorrichtung 11 an den zumindest zwei voneinander beabstandeten Befestigungspunkten 34 angeordnet sein.

Besonders bevorzugt umfasst die zumindest eine Verbindungsvorrichtung 11 eine Klemmverbindung zur Verbindung des wenigstens einen Zugelements 4 mit dem Auflager 3.

Bevorzugt kann vorgesehen sein, dass die zumindest eine Verbindungsvorrichtung 11 bei wenigstens einem Teil der beweglich gelagerten Auflager 3 an zumindest einer Stirnseite 12 des jeweiligen Auflagers 3 angeordnet ist. Dadurch ergibt sich der Vorteil, dass die Verbindungsvorrichtung 11 im Falle einer Wartungsarbeit besonders einfach zugänglich ist und somit Reparaturarbeiten an dem wenigstens einen Auflager 3 besonders einfach durchgeführt werden können. Weiters kann dadurch auch ein Austausch von Einzelteilen des Auflagers 3 bzw. ein Austausch des Auflagers 3 selbst schnell und einfach durchgeführt werden.

Bevorzugt kann vorgesehen sein, dass wenigstens zwei der Vielzahl der beweglich gelagerten Auflager 3 derart mit dem wenigstens einen Zugelement 4 verbunden sind, dass bei einem ersten Auflager die Verbindungsvorrichtung 11 an einer ersten Stirnseite und bei einem zweiten Auflager die Verbindungsvorrichtung 11 an einer von der ersten Stirnseite abgewandten zweiten Stirnseite angeordnet ist. Dadurch ergibt sich der Vorteil, dass ein besonders stabiler und kippsicherer Aufbau des umlaufenden Zugbandes erreicht wird, wodurch die Auflager 3 bei der Führung entlang der zumindest einen Führungsschiene 6 besonders sicher vor einer seitlichen Krafteinwirkung geschützt sind. In den Fig. 11 bis 13 sind zwei derart mit dem wenigstens einen Zugelement 4 verbundene Auflager 3 nicht ersichtlich. Aus diesem Grund wurde auf die Verwendung eines Bezugszeichens für das erste Auflager, das zweite Auflager, die erste Stirnseite und die zweite Stirnseite verzichtet.

Bevorzugt kann vorgesehen sein, dass die Förderanlage 1 eine Abwurfvorrichtung 13 umfasst, welche dazu ausgebildet ist das längliche Stückgut 2 in dem Förderbereich 5 seitlich von den Auflagern 3 abzuwerfen. Dadurch ergibt sich der Vorteil, dass die Förderanlage 1 zur Sortierung des länglichen Stückguts 2 verwendet werden kann, wobei unterschiedliche Stückguter 2 entlang des Förderbereiches 5 von den Auflagern 3 abgeworfen werden können.

Besonders bevorzugt kann vorgesehen sein, dass die Förderanlage 1 entlang des Förderbereiches 5 zumindest eine Abwurfvorrichtung 13 umfasst. Insbesondere ist vorgesehen, dass entlang des Förderbereiches 5 zwei, bevorzugt drei, besonders bevorzugt vier Abwurfvorrichtungen 13 angeordnet sind.

Bevorzugt kann vorgesehen sein, dass die Abwurfvorrichtung 13 der Förderanlage 1 dazu ausgebildet ist das längliche Stückgut 2 auf beiden Seiten des Förderbereiches 5 abzuwerfen. Dadurch ergibt sich der Vorteil, dass bei einem Sortierprozess der Förderanlage 1 mehr Sortiermöglichkeiten für das längliche Stückgut 2 zur Verfügung stehen, wodurch sich mehrere Möglichkeiten für die Ausbildung einer Sortierstraße ergeben.

Bevorzugt kann vorgesehen sein, dass die Abwurfvorrichtung 13 ein Stoßelement umfasst, welches dazu ausgebildet ist, das längliche Stückgut 2 seitlich von den Auflagern 3 abzuwerfen.

Besonders bevorzugt kann das Stoßelement Teil der Abwurfvorrichtung 13 sein.

Bevorzug kann vorgesehen sein, dass die Abwurfvorrichtung 13 der Förderanlage 1 als Exzenterabschieber und/oder als Rotationsabschieber ausgebildet ist. Dies kann insbesondere dann vorgesehen sein, wenn die Förderanlage 1 als Vorsortierspitzenzug eingesetzt wird. Dabei kann bevorzugt vorgesehen sein, dass Abschiebelineare das längliche Stückgut von den Auflagern 3 abwerfen.

Besonders bevorzugt kann die Abwurfvorrichtung 13 im Wesentlichen hufeisenförmig oder U-förmig ausgebildet sein.

Besonders bevorzugt kann die Abwurfvorrichtung 13 entlang einer in Längstransportrichtung 7 ausgerichteten Achse drehbar gelagert sein.

Besonders bevorzugt umfasst die Abwurfvorrichtung 13 drei Stellungen, wobei in einer ersten Stellung die Abwurfvorrichtung 13 in einer Neutralstellung ist, wobei in einer zweiten Stellung die Abwurfvorrichtung 13 das längliche Stückgut 2 auf einer ersten Seite von den Auflagern 3 aus dem Förderbereich 5 abwirft, wobei in einer dritten Stellung die Abwurfvorrichtung 13 das längliche Stückgut 2 auf einer zweiten Seite von den Auflagern 3 aus dem Förderbereich 5 abwirft.

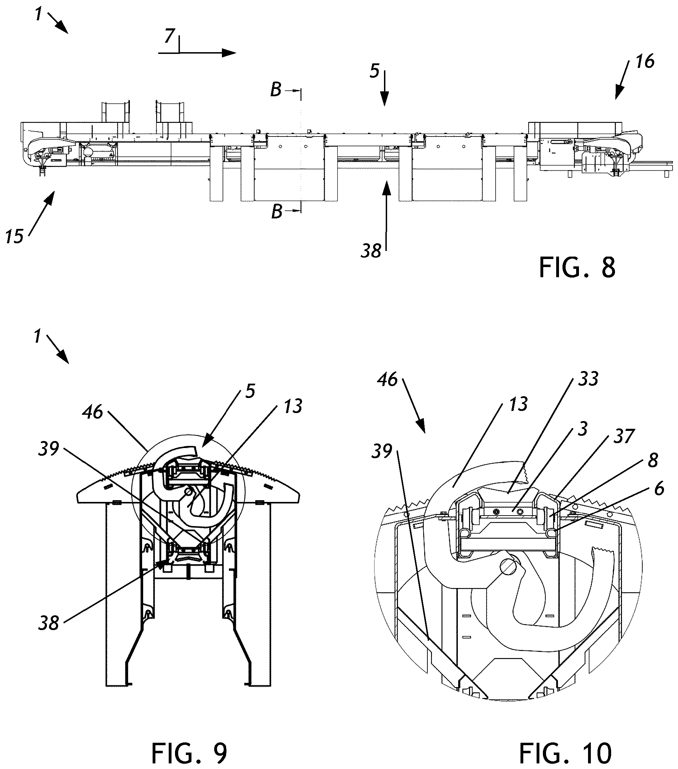

Insbesondere kann vorgesehen sein, dass die Auflager 3 in wenigstens einem Abwurfbereich der Abwurfvorrichtung 13 kippsicher gelagert sind. Bevorzugt ist der Abwurfbereich 13 ein Bereich in der unmittelbaren Nähe der Abwurfvorrichtung 13. Bevorzugt kann vorgesehen sein, dass sich der Abwurfbereich der Abwurfvorrichtung 13 von der Abwurfvorrichtung 13 um eine Stücklänge des mit der Förderanlage 1 zu transportierenden länglichen Stückgutes 2, insbesondere in Längstransportrichtung 7 und/oder entgegen der Längstransportrichtung 7, weg erstreckt. In Fig. 8 ist die erste bevorzugte Ausführungsform der Förderanlage 1 in Seitenansicht gezeigt. Weiters ist in Fig. 8 die Schnittlinie B-B in dem Abwurfbereich eingezeichnet, welche Schnittlinie B-B einen Schnitt senkrecht zur Längstransportrichtung 7 kennzeichnet. In der Fig. 9 ist der Schnitt B-B der in der Fig. 8 eingezeichneten Schnittlinie B-B dargestellten. In der Fig. 9 ist auch beispielhaft das Stoßelement gezeigt, welches dazu ausgebildet ist, das längliche Stückgut 2 seitlich von den Auflagern 3 abzuwerfen.

Insbesondere kann vorgesehen sein, dass die Schmutzführung 39 in einem Bereich der Förderanlage 1 angeordnet ist, in welchem auch die Abwurfvorrichtung 13 angeordnet ist. Insbesondere kann die Schmutzführung 39 in dem Abwurfbereich der Förderanlage 1 angeordnet sein. In Fig. 10 ist der in Fig. 9 mit dem Bezugszeichen 46 gekennzeichnete Bildausschnitt der ersten bevorzugten Ausführungsform der Förderanlage 1 ersichtlich. Dabei sind in der Fig. 10 die Schmutzführung 39 und die Abwurfvorrichtung 13 beispielhaft gezeigt.

Insbesondere kann die Schmutzführung 39 - in Längstransportrichtung 7 betrachtet - vor der Abwurfvorrichtung 13 und/oder nach der Abwurfvorrichtung 13 angeordnet sein.

Insbesondere kann die Schmutzführung 39 an der Stützkonstruktion 43 befestigt sein.

Bevorzugt kann vorgesehen sein, dass die Förderanlage 1 eine Zugbandreinigungsvorrichtung 40 zur Reinigung des umlaufenden Zugbandes umfasst, welche Zugbandreinigungsvorrichtung 40 in dem Rückführbereich 38 angeordnet ist. Dadurch ergibt sich der Vorteil, dass das umlaufende Zugband gereinigt werden kann, wobei der in dem Rückführbereich 38 transportierte Schmutz mittels der Zugbandreinigungsvorrichtung abgeführt werden kann.

Insbesondere kann die Zugbandreinigungsvorrichtung eine Kehrvorrichtung zum Auskehren von Schmutz aus dem umlaufenden Zugband in dem Rückführbereich 38 umfassen.

Bevorzugt kann die Zugbandreinigungsvorrichtung dazu ausgebildet sein, Schmutz von den umlaufenden Zugband in dem Rückführbereich 38 mittels Kehrschaufeln aufzunehmen und in einen Entsorgungsförderer 42 abzugeben.

Insbesondere kann der Entsorgungsförderer 42 in einem Betriebszustand der Förderanlage 1 seitlich versetzt zu dem umlaufenden Zugband und/oder zumindest teilweise unterhalb des umlaufenden Zugbandes angeordnet sein. In Fig. 3 ist beispielsweise die erste bevorzugte Ausführungsform der Förderanlage 1 als Teil einer Sortieranlage in axonometrischer Darstellung gezeigt, wobei zumindest Teile der Sortieranlage mit dem Entsorgungsförderer 42 gezeigt sind.

Insbesondere kann die Zugbandreinigungsvorrichtung - in Längstransportrichtung 7 betrachtet - vor der ersten Richtungsänderungsvorrichtung des ersten Transportrichtungsänderungsbereich 15 angeordnet sein.

Insbesondere kann die Zugbandreinigungsvorrichtung - in Längstransportrichtung betrachtet - nach der zweiten Richtungsänderungsvorrichtung des zweiten Transportrichtungsänderungsbereich 16 angeordnet sein.

In den Fig. 1 bis 10 sind zumindest Teile der ersten bevorzugten Ausführungsform der Förderanlage 1 gezeigt. Bei der ersten bevorzugten Ausführungsform der Förderanlage 1 ist insbesondere vorgesehen, dass mehrere Auflager 3 mittels wenigstens eines Zugelements 4 zu dem umlaufenden Zugband verbunden sind, dass jedes der Auflager 3 eine Vertiefung 33 zum Auflegen des länglichen Stückguts aufweist, dass jedes der Auflager 3 an zumindest zwei voneinander beabstandeten Befestigungspunkten 34 mit dem wenigstens einen Zugelement 4 befestigt ist und dass das umlaufende Zugband zumindest in einem Förderbereich 5 der Förderanlage 1 mittels Rollen 8 beweglich gegenüber der Stützkonstruktion 43 gelagert ist.

Weiters zeigen die Fig. 11 bis 13 zumindest Teile der zweiten bevorzugten Ausführungsform der Förderanlage 1 zum Längstransport von länglichem Stückgut 2 mittels einer Vielzahl beweglich gelagerter Auflager 3, wobei die Vielzahl der Auflager 3 mittels wenigstens eines Zugelements 4 zu einem umlaufenden Zugband verbunden sind, wobei die Förderanlage 1 in einem Förderbereich 5 zumindest eine Führungsschiene 6 in Längstransportrichtung 7 umfasst, wobei jeder Auflager 3 zumindest eine Rolle 8 zur Führung des Auflagers 3 entlang der zumindest einen Führungsschiene 6 umfasst, und dass jeder Auflager 3 in dem Förderbereich 5 an der zumindest einen Führungsschiene 6 kippsicher gelagert ist. Durch die kippsichere Lagerung jedes Auflagers 3 in dem Förderbereich 5 an der zumindest einen Führungsschiene 6 ergibt sich insbesondere der Vorteil, dass ein effizienter und sicherer Betrieb der Förderanlage 1 bei einer gleichzeitig hohen Förderkapazität erreicht wird.

Bevorzugt kann vorgesehen sein, dass die Förderanlage 1 Teil einer Sortieranlage ist.

Eine Sortieranlage ist eine Anlage, welche dazu vorgesehen ist verschiedene längliche Stückgüter 2 nach vorgegebenen Kriterien zu sortieren.

Bevorzugt wird dabei unsortiertes längliches Stückgut 2 von der Sortieranlage eingangsseitig aufgenommen und sortiert ausgangsseitig abgegeben.

Bevorzugt wird das längliche Stückgut 2 von der Sortieranlage eingangsseitig im Quertransport aufgenommen.

Bevorzugt wird das längliche Stückgut 2 von der Sortieranlage im Längstransport sortiert.

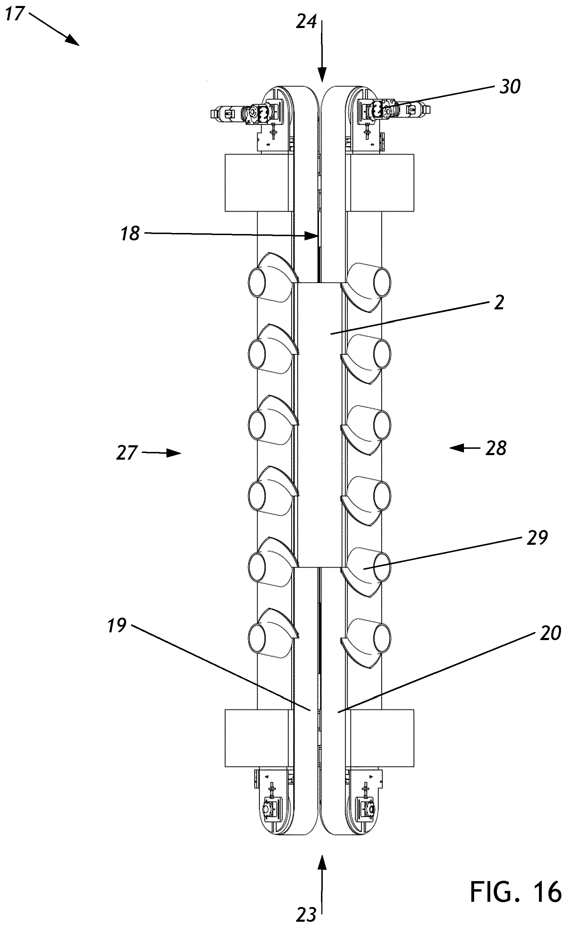

In den Fig. 1 bis 16 sind beispielhaft zumindest Teile der Sortieranlage dargestellt, wobei die Sortieranlage in den Fig. 1 bis 16 als gesamtes nicht dargestellt ist.

Bevorzugt wird das mit der Förderanlage 1 zu transportierende längliche Stückgut 2 bevorzugt im Quertransport von der Sortieranlage eingangsseitig angenommen.

Dabei kann die Sortieranlage bevorzugt eine Umlenkvorrichtung 17 umfassen, um unsortiertes längliches Stückgut 2 an die Förderanlage 1 abzugeben.

Bevorzugt kann das längliche Stückgut 2 mittels der Umlenkvorrichtung 17 aus dem Quertransport in den Längstransport umgelenkt werden. Bevorzugt kann das längliche Stückgut 2 mittels der Umlenkvorrichtung 17 an die Förderanlage 1 abgegeben werden.

Weiters kann die Sortieranlage bevorzugt zumindest eine Lagereinheit 31 umfassen, wobei die sortierten Stückgüter bevorzugt in die zumindest eine Lagereinheit 31 abgelegt sind. Insbesondere kann die Lagereinheit 31 auch als Sortierbehälter oder als Ausboxer bezeichnet werden.

Insbesondere kann vorgesehen sein, dass die sortierten Stückgüter in mehrere Lagereinheiten 31 abgelegt sind. Dabei kann bevorzugt vorgesehen sein, dass sich die Lagereinheiten 31 in der Längserstreckung unterscheiden.

Insbesondere kann vorgesehen sein, dass die zumindest eine Lagereinheit 31 derart ausgebildet ist, dass die Länge des länglichen Stückgutes 2 der Länge der zumindest einen Lagereinheit 31 entspricht.

Bevorzugt kann die zumindest eine Lagereinheit 31 in Längstransportrichtung 7 neben der Förderanlage 1 angeordnet sein.

Besonders bevorzugt kann die zumindest eine Lagereinheit 31 eine Stückgutaufnahmeöffnung 32 aufweisen. Insbesondere kann vorgesehen sein, dass ein Endbereich des länglichen Stückgutes 2 in der Stückgutaufnahmeöffnung 32 angeordnet ist. In den Fig. 3 und Fig. 5 ist beispielsweise in der ersten bevorzugten Ausführungsform der Förderanlage 1 und in den Fig. 11 und Fig. 12 ist beispielsweise in der zweiten bevorzugten Ausführungsform der Förderanlage 1 die Lagereinheit 31 und die Stückgutaufnahmeeinheit 31 der Sortieranlage ersichtlich.

Bevorzugt kann vorgesehen sein, dass die Sortieranlage weiters eine Umlenkvorrichtung 17 für längliches Stückgut 2 umfasst, dass die Umlenkvorrichtung 17 einen Aufnahmebereich 18 aufweist, dass der Aufnahmebereich 18 dazu ausgebildet ist, das längliche Stückgut 2 eingangsseitig im Quertransport aufzunehmen und das längliche Stückgut 2 ausgangsseitig im Längstransport abzugeben, dass die Umlenkvorrichtung 17 zumindest zwei in einem Winkel zueinander angeordnete bandförmige Förderer 19, 20 in Längstransportrichtung 7 umfasst, wobei die zumindest zwei bandförmigen Förderer 19, 20 in einem Betriebszustand der Umlenkvorrichtung 17 den Aufnahmebereich 18 aufspannen.

Dadurch ergibt sich der Vorteil, dass längliches Stückgut 2 bzw. länglicher Stückgüter derart aus dem Quertransport in den Längstransport übergeben werden können, dass eine möglichst einheitliche Lücke zwischen den länglichen Stückgütern 2 erhalten wird. Dadurch wird der Regelaufwand zur Vereinheitlichung der Lücken zwischen den länglichen Stückgütern 2 in einer an die Umlenkvorrichtung 1 anschließenden Längssortierstrecke deutlich reduziert. Durch die Ausbildung und Anordnung der bandförmigen Förderer 19, 20 können längliche Stückgüter 2 schneller und mit kürzeren Zeitintervallen zwischen den länglichen Stückgütern 2 aus dem Quertransport in den Längstransport übergeben werden, da die Lücken zwischen den länglichen Stückgütern 2 bereits bei der Übergabe der länglichen Stückgüter 2 aus dem Quertransport in den Längstransport im Wesentlichen einheitlich ausgebildet werden. Dadurch kann speziell bei der Einspeisung eines länglichen Stückgutes 2 von einer Seite der Umlenkvorrichtung 17 der Förderprozess deutlich beschleunigt werden. Durch den Aufnahmebereich 18 ergibt sich auch der Vorteil, dass die Lücken zwischen länglichen Stückgütern 2 unterschiedlicher Abmessungen im Wesentlichen einheitlich ausgebildet werden, nachdem die länglichen Stückgüter 2 bei der Übergabe aus dem Quertransport in den Längstransport schneller mit einer größeren Fläche der zumindest zwei bandförmigen Förderer 19, 20 in Kontakt gelangen. Dadurch werden die länglichen Stückgüter 2 schneller in Längstransportrichtung 7 zentriert und folglich schneller aus den Aufnahmebereich 18 abtransportiert. Durch den Aufnahmebereich 18 und der Förderung der länglichen Stückgüter 2 auf den zumindest zwei bandförmigen Förderern 19, 20 werden auch keine Anlaufkanten ausgebildet. Dadurch können die länglichen Stückgüter 2 nicht an seitlichen Verblechungen der Umlenkvorrichtung 17 anstoßen, wodurch die Fördergeschwindigkeit der länglichen Stückgüter 2 nicht reduziert wird. Dadurch wird auch in vorteilhafterweise eine Pendelbewegung des länglichen Stückgutes 2 bei der Aufnahme des länglichen Stückgutes 2 aus dem Quertransport unterbunden. Dabei hat sich dieser Effekt besonders bei kürzeren Stückgütern 2 als besonders effizienzsteigernd für den Förderprozess erwiesen. Weiters kann durch die Ausbildung des Aufnahmebereiches 18 durch die zumindest zwei bandförmigen Förderer 19, 20 auf eine Ölschmierung an freiliegenden Bauteilen der Umlenkvorrichtung 17 verzichtet werden. Durch diesen Wegfall der Ölschmierung kann somit kein Öl durch die Umlenkvorrichtung 17 selbst an dem Aufstellungsort der Umlenkvorrichtung 17 in die Umwelt gelangen.

Dabei hat sich gezeigt, dass die Sortieranlage besonders gut betrieben werden kann, wenn die Förderanlage 1 mit der Umlenkvorrichtung 17 kombiniert wird. Durch die Kombination der Förderanlage 1 mit der Umlenkvorrichtung 17 ergeben sich Synergieeffekte, wobei nach einem Umlenken des länglichen Stückgutes 2 aus dem Quertransport in den Längstransport das längliche Stückgut besonders genau und effizient an die Förderanlage 1 abgegeben werden kann. Dadurch kann das längliche Stückgut 2 besonders gut von der Förderanlage 1 aufgenommen werden, wobei eine schnelle und genaue Übergabe des länglichen Stückgutes 2 an die Auflager 3 der Förderanlage 1 gewährleistet werden kann.

Grundsätzlich könnte die Umlenkvorrichtung 17 auch mit einer anderen als hier beschriebenen Förderanlage 1 betrieben werden.

Bevorzugt ist die Umlenkvorrichtung 17 dazu ausgebildet, dass eine umweltfreundliche und harmonisierte Übergabe von länglichem Stückgut 2 aus dem Quertransport in den Längstransport erreicht wird.

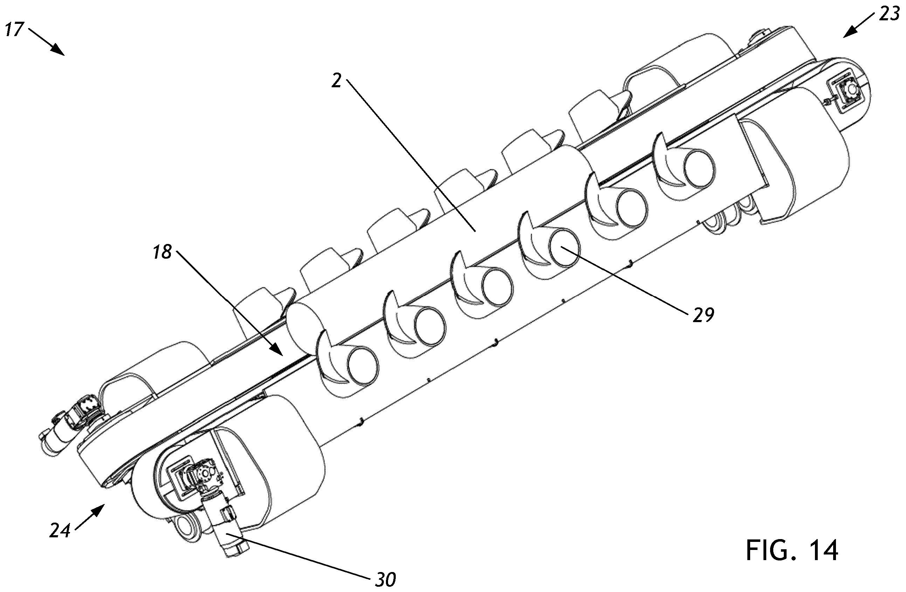

Die Fig. 14 bis 16 zeigen zumindest Teile einer bevorzugte Ausführungsform einer Umlenkvorrichtung 17 für längliches Stückgut 2, wobei die Umlenkvorrichtung 17 einen Aufnahmebereich 18 aufweist, wobei der Aufnahmebereich 18 dazu ausgebildet ist, das längliche Stückgut 2 eingangsseitig im Quertransport aufzunehmen und das längliche Stückgut 2 ausgangsseitig im Längstransport abzugeben, wobei die Umlenkvorrichtung 17 zumindest zwei in einem Winkel zueinander angeordnete bandförmige Förderer 19, 20 in Längstransportrichtung 7 umfasst, wobei die zumindest zwei bandförmigen Förderer 19, 20 in einem Betriebszustand der Umlenkvorrichtung 17 den Aufnahmebereich 18 aufspannen.

Die Umlenkvorrichtung 17 ist eine Vorrichtung, welch dazu ausgebildet ist längliches Stückgut 2 eingangsseitig im Quertransport aufzunehmen und das längliche Stückgut 2 ausgangsseitig im Längstransport abzugeben.

Als Quertransport ist bevorzugt ein Transport des länglichen Stückgutes 2 in die Richtung orthogonal zur Längstransportrichtung 7 des länglichen Stückgutes 2 zu verstehen.

Als Längstransport ist bevorzugt ein Transport des länglichen Stückgutes 2 in die Richtung der Längserstreckung des länglichen Stückgutes 2 zu verstehen.

Die Umlenkvorrichtung 17 kann auch als Fördervorrichtung bezeichnet werden. Bevorzugt ist die Richtung, in welche das längliche Stückgut 2 im Längstransport abgegeben bzw. transportiert wird, die Längstransportrichtung 7.

Bevorzugt ist die Umlenkvorrichtung 17 zur Änderung der Förderrichtung des längliches Stückgutes 2 ausgebildet. Besonders bevorzugt ist die Förderrichtung die Richtung in die das längliche Stückgut 2 gefördert bzw. transportiert wird. Bevorzugt kann vorgesehen sein, dass sich die Förderrichtung der Umlenkvorrichtung 17 eingangsseitig und ausgangsseitig unterscheidet.

Bevorzugt ist die Förderrichtung der Umlenkvorrichtung 17 eingangsseitig orthogonal zur Längserstreckung der Umlenkvorrichtung 17.

Besonders bevorzugt ist die Förderrichtung der Umlenkvorrichtung 17 eingangsseitig orthogonal zur Längserstreckung des länglichen Stückgutes 2.

Bevorzugt ist die Förderrichtung der Umlenkvorrichtung 17 ausgangsseitig in die Längstransportrichtung 7 der Umlenkvorrichtung 17.

Es ist vorgesehen, dass die Umlenkvorrichtung 17 einen Aufnahmebereich 18 aufweist. Der Aufnahmebereich 18 ist bevorzugt zur Aufnahme des länglichen Stückgutes 2 ausgebildet. Bevorzugt wird das längliche Stückgut 2 in den Aufnahmebereich 18 aus dem Quertransport von einem Quertransporter übergeben. Nachdem einem Fachmann der Begriff eines Quertransporters bekannt ist, wird an dieser Stelle auf die Aufzählung und auf die Beschreibung unterschiedlicher Quertransporter verzichtet.

Insbesondere wird das längliche Stückgut 2 eingangsseitig von einem Zubringer im Quertransport aufgenommen.

Insbesondere kann der Zubringer ein Quertransporter sein.

Bevorzugt wird für die Übergabe des länglichen Stückgutes 2 aus dem Quertransport in den Längstransport das Eigengewicht des länglichen Stückgutes 2 und die Erdbeschleunigung genutzt.

Besonders bevorzugt ist der Aufnahmebereich 18 im Betriebszustand der Umlenkvorrichtung 17 nach oben offen ausgebildet. Bevorzugt ist der Aufnahmebereich 18 der Umlenkvorrichtung 17 eine Öffnung, welche Öffnung im Betriebszustand der Umlenkvorrichtung 17 dem Untergrund abgewandt angeordnet ist.

Bei der Bezeichnung des Aufnahmebereiches 18 als Aufnahmeraum ist bevorzugt vorgesehen, dass der Aufnahmeraum kein abgeschlossener Raum ist. Bevorzugt ist der Aufnahmeraum im Betriebszustand der Umlenkvorrichtung 17 nach oben offen ausgebildet.

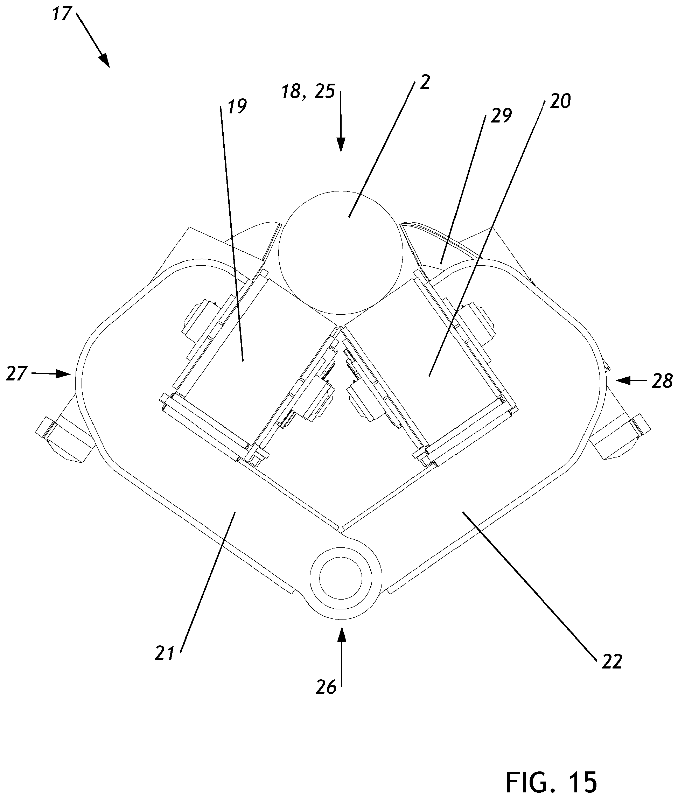

In Fig 15. ist beispielhaft die bevorzugte Ausführungsform der Umlenkvorrichtung 17 mit einem länglichen Stückgut 2 dargestellt, welche in dem Aufnahmebereich 18 der Umlenkvorrichtung 17 aufgenommen wurde.

Bevorzugt weist die Umlenkvorrichtung 17 einen ersten und einen zweiten Endbereich 23, 24 auf, wobei an dem ersten Endbereich 23 der Umlenkvorrichtung 17 das längliche Stückgut 2 im Längstransport, insbesondere an die Förderanlage 1 zum Längstransport von länglichem Stückgut 2, übergeben wird, wobei der zweite Endbereich 24 der Umlenkvorrichtung 17 gegenüberliegend und beabstandet zu dem ersten Endbereich 23 der Umlenkvorrichtung 17 angeordnet ist. In Fig. 14 ist beispielhaft die bevorzugte Ausführungsform der Umlenkvorrichtung 17 mit dem ersten und dem zweiten Endbereich 23, 24 dargestellt.

Bevorzugt weist die Umlenkvorrichtung 17 eine Oberseite 25 auf, an welcher Oberseite 25 das längliche Stückgut 2 transportiert wird.

Bevorzugt weist die Umlenkvorrichtung 17 eine zu der Oberseite 25 der Umlenkvorrichtung 17 gegenüberliegend und beabstandet angeordnete Unterseite 26 auf.

Bevorzugt weist die Umlenkvorrichtung 17 eine erste Querseite 27 und eine zweite Querseite 28 auf, wobei an der ersten Querseite 27 und/oder an der zweiten Querseite 28 das längliche Stückgut 2 eingangsseitig im Quertransport aufgenommen werden kann.

In Fig. 15 ist beispielhaft die bevorzugte Ausführungsform der Umlenkvorrichtung 17 mit der Oberseite 25, der Unterseite 26, der ersten Querseite 27 und der zweiten Querseite 28 dargestellt.

Es ist vorgesehen, dass die zumindest zwei bandförmigen Förderer 19, 20 in einem Betriebszustand der Umlenkvorrichtung 17 den Aufnahmebereich 18 aufspannen.

Dabei kann insbesondere vorgesehen sein, dass die Förderrichtung der bandförmigen Förderer 19, 20 in Längstransportrichtung 7 angeordnet ist.

Als bandförmige Förderer können insbesondere Förderer angesehen werden, welche in Längstransportrichtung 7 bewegliche Förderflächen umfassen.

Insbesondere kann vorgesehen sein, dass auf den in Längstransportrichtung 7 beweglichen Förderflächen das längliche Stückgut 2 transportiert wird.

Bevorzugt können die bandförmigen Förderer 19, 20 mechanische Förderer sein.

Besonders bevorzugt können die bandförmigen Förderer 19, 20 Bandförderer und/oder Kettenförderer sein.

Insbesondere können die bandförmigen Förderer 19, 20 Förderbänder zum Transport des länglichen Stückgutes 2 umfassen.

Insbesondere können die bandförmigen Förderer 19, 20 Förderketten zum Transport des länglichen Stückgutes 2 umfassen.

Bevorzugt wird das längliche Stückgut 2 mit den zumindest zwei bandförmigen Förderer 19, 20 transportiert bzw. befördert.

Bevorzugt weisen die zumindest zwei bandförmigen Förderer 19 ,20 dieselbe Förderbreite auf.

Alternativ kann vorgesehen sein, dass die zumindest zwei bandförmigen Förderer 19 ,20 unterschiedliche Förderbreiten aufweisen.

Bevorzugt umfassen die zumindest zwei bandförmigen Förderer 19, 20 wenigstens eine Antriebseinheit. Bevorzugt umfassen die zumindest zwei bandförmigen Förderer 19, 20 jeweils wenigstens eine Antriebseinheit. Insbesondere ist vorgesehen, dass die zumindest zwei bandförmigen Förderer 19, 20 durch die wenigstens eine Antriebseinheit angetrieben werden. Bevorzugt kann die wenigstens eine Antriebseinheit zumindest einen Motor, insbesondere einen Elektromotor, zum Antreiben der zumindest zwei bandförmigen Förderer 19, 20 umfassen.

Bevorzugt kann die wenigstens eine Antriebseinheit zumindest einen Getriebemotor zum Antreiben der zumindest zwei bandförmigen Förderer 19, 20 umfassen.

Besonders bevorzugt kann vorgesehen sein, dass sich die bandförmigen Förderer 19, 20 im Wesentlichen mit der gleichen Geschwindigkeit bewegen.

Bei der Ausbildung der zumindest zwei bandförmigen Förderer 4,5 als Bandförderer kann vorgesehen sein, dass die wenigstens eine Antriebseinheit der zumindest zwei bandförmigen Förderer 19, 20 eine Rolleneinheit zum Führen der zumindest zwei bandförmigen Förderer 19, 20 entlang der Längstransportrichtung 7 umfasst.

Bevorzugt kann vorgesehen sein, dass die Umlenkvorrichtung 17 genau zwei in einem Winkel zueinander angeordnete bandförmige Förderer 19, 20 umfasst. Besonders bevorzugt kann vorgesehen sein, dass die Umlenkvorrichtung 17 genau zwei in einem vordefinierten Winkel zueinander angeordnete bandförmige Förderer 19, 20 umfasst. In den Fig. 14 bis 16 ist beispielhaft die bevorzugte Ausführungsform der Umlenkvorrichtung 17 mit zwei bandförmigen Förderern 19, 20 darstellt.

Der Betriebszustand der Umlenkvorrichtung 17 ist bevorzugt ein Zustand in dem längliches Stückgut 2 mittels der Umlenkvorrichtung 17 eingangsseitig im Quertransport aufgenommen und ausgangsseitig im Längstransport abgegeben wird.

Bevorzugt ist der Aufnahmebereich 18 durch die zumindest zwei bandförmigen Förderer 19, 20 ausgebildet.

Besonders bevorzugt kann vorgesehen sein, dass die zumindest zwei bandförmigen Förderer 19, 20 wenigstens eine Dämpfung umfassen. Bevorzugt ist die wenigstens eine Dämpfung dazu ausgebildet einen Aufprall des länglichen Stückgutes 2 auf die zumindest zwei bandförmigen Förderer 19, 20 zu dämpfen. Dadurch ergibt sich der Vorteil, dass das längliche Stückgut 2 schneller in Längstransportrichtung 7 beschleunigt werden kann.

Insbesondere kann die wenigstens eine Dämpfung durch die zumindest zwei bandförmigen Förderer 19, 20 selbst ausgebildet sein.

Insbesondere kann die wenigstens eine Dämpfung in der Rolleneinheit der zumindest zwei bandförmigen Förderer 19, 20 ausgebildet sein. Dabei kann bevorzugt vorgesehen sein, dass die Rolleneinheit wenigstens einen hydraulischen Dämpfer und/oder wenigstens einen Reibungsdämpfer umfasst.

Bevorzugt kann vorgesehen sein, dass an der ersten Querseite 27 und/oder an der zweiten Querseite 28 der Umlenkvorrichtung 17 zumindest ein Förderrad 29 zur Beschleunigung des länglichen Stückgutes 2 entlang der Förderrichtung angeordnet ist.

Besonders bevorzugt ist die erste Querseite 27 und/oder die zweite Querseite 28 der Umlenkvorrichtung 17 dazu ausgebildet das längliche Stückgut 2 eingangsseitig im Quertransport anzunehmen.

Bevorzugt umfasst die Umlenkvorrichtung 17 entlang der Längstransportrichtung 7 mehrere Förderräder 29 zur Beschleunigung des länglichen Stückgutes 2 entlang der Förderrichtung.

Bevorzugt kann das zumindest eine Förderrad 29 dazu ausgebildet sein das längliche Stückgut 2 entlang der Förderrichtung zu beschleunigen.

Besonders bevorzugt kann das zumindest eine Förderrad 29 schraubenförmig und/oder konisch geformt ausgebildet sein.

Besonders bevorzugt kann das zumindest eine Förderrad 29 dazu ausgebildet sein das längliche Stückgut 2 bereits vor Kontakt mit den zumindest zwei bandförmigen Förderern 19, 20 entlang der Förderrichtung zu beschleunigen.

Nachdem der Aufnahmebereich 18 der Umlenkvorrichtung 17 das längliche Stückgut 2 eingangsseitig im Quertransport aufnimmt und bei dem Quertransport des länglichen Stückgutes 2 im Wesentlichen keine Längsbeschleunigung des länglichen Stückgutes 2 vorliegt, ist unter der Beschleunigung des länglichen Stückgutes 2 mittels des zumindest einen Förderrades 29 eine Beschleunigung des länglichen Stückgutes 2 in die Längstransportrichtung 7 bei der Übergabe des länglichen Stückgutes 2 aus dem Quertransport in den Längstransport zu verstehen.

Bevorzugt wird das längliche Stückgut 2 bei der eingangsseitigen Aufnahme des länglichen Stückgutes 2 mittels des zumindest einen Förderrades 29 in Längstransportrichtung 7 beschleunigt. Bevorzugt wird das längliche Stückgut 2 in Längstransportrichtung 7 beschleunigt bevor das längliche Stückgut 2 mit wenigstens einem der zumindest zwei bandförmigen Förderer 19, 20 in Kontakt gelangt.

Bevorzugt kann vorgesehen sein, dass durch die zumindest zwei bandförmigen Förderer 19, 20 ein V-förmiges Profil des Aufnahmebereiches 18 aufgespannt ist. Dadurch ergibt sich der Vorteil, dass eine besonders schlupfminimierte Längsbeschleunigung des länglichen Stückgutes 2 bei der Übergabe des länglichen Stückgutes 2 aus dem Quertransport in den Längstransport erreicht wird. Weiters ergibt sich dadurch auch der Vorteil, dass es speziell bei kürzeren länglichen Stückgütern 2 zu keiner Pendelbewegung bei der Aufnahme des länglichen Stückgutes 2 in den Aufnahmebereich 18 kommt.

Bevorzugt wird das V-förmige Profil des Aufnahmebereiches 18 durch die zumindest zwei bandförmigen Förderer 19, 20 ausgebildet.

Besonders bevorzugt kann das V-förmige Profil des Aufnahmebereiches 18 in dem Betriebszustand der Umlenkvorrichtung 17 nach oben offen sein.

Bevorzugt kann vorgesehen sein, dass der Aufnahmebereich 18 lediglich durch die zumindest zwei bandförmigen Förderer 19, 20 begrenzt ist. Dadurch ergibt sich der Vorteil, dass das längliche Stückgut 2 besonders gut durch den Aufnahmebereich 18 aufgenommen werden kann, wobei das längliche Stückgut 2 besonders schnell mit einer größeren Fläche der zumindest zwei bandförmigen Förderer 19, 20 in Kontakt gelangen kann.

Besonders bevorzugt kann vorgesehen sein, dass der Aufnahmebereich 18 durch die zumindest zwei bandförmigen Förderer 19, 20 im Betriebszustand der Umlenkvorrichtung 17 nach unten begrenzt ist.

Besonders bevorzugt kann vorgesehen sein, dass der Aufnahmebereich 18 ausschließlich durch die zumindest zwei bandförmigen Förderer 19, 20 begrenzt ist.

Bevorzugt kann vorgesehen sein, dass die zumindest zwei bandförmigen Förderer 19, 20 in einem Winkel von größer gleich 60 Grad, bevorzugt größer gleich 80 Grad, besonders bevorzugt größer gleich 100 Grad, zueinander angeordnet sind. Dadurch ergibt sich der Vorteil, dass das längliche Stückgut 2 besonders effizient von dem Aufnahmebereich 18 aufgenommen werden kann, wodurch eine besonders schnelle Zentrierung des länglichen Stückgutes 2 erreicht wird und wodurch eine schlupfminimierte Längsbeschleunigung erreicht wird.

Bevorzugt kann vorgesehen sein, dass die zumindest zwei bandförmigen Förderer 19, 20 in einem Winkel von kleiner gleich 180 Grad, bevorzugt kleiner gleich 160 Grad, besonders bevorzugt von kleiner gleich 140 Grad, zueinander angeordnet sind. Dadurch ergibt sich der Vorteil, dass das längliche Stückgut 2 besonders effizient von dem Aufnahmebereich 18 aufgenommen werden kann, wodurch eine besonders schnelle Zentrierung des länglichen Stückgutes 2 erreicht wird und wodurch eine schlupfminimierte Längsbeschleunigung erreicht wird.

Bevorzugt kann vorgesehen sein, dass die zumindest zwei bandförmigen Förderer 19, 20 in einem Winkel von im Wesentlichen 110 Grad zueinander angeordnet sind. Dadurch ergibt sich der Vorteil, dass das längliche Stückgut 2 besonders effizient von dem Aufnahmebereich 18 aufgenommen werden kann, wodurch eine besonders schnelle Zentrierung des länglichen Stückgutes 2 erreicht wird und wodurch eine besonders gute schlupfminimierte Längsbeschleunigung erreicht wird.

Insbesondere ist der Winkel unter welchem die zwei bandförmigen Förderer 19, 20 zueinander angeordnet sind, der Winkel, welcher auf einer Ebene senkrecht zur Längstransportrichtung 7 im Betriebszustand der Umlenkvorrichtung 17 durch eine erste Tangente auf einer ersten Oberfläche der zumindest zwei bandförmigen Förderer 19, 20 und einer zweiten Tangente auf einer zweiten Oberfläche der zumindest zwei bandförmigen Förderer 19, 20 eingeschlossen wird.

Bevorzugt kann vorgesehen sein, dass die zumindest zwei bandförmigen Förderer 19, 20 in dem Betriebszustand der Umlenkvorrichtung 17 arretiert sind, wobei wenigstens ein bandförmiger Förderer 19 der zumindest zwei bandförmigen Förderer 19, 20 in einem Wartungszustand der Umlenkvorrichtung 17 in eine Wartungsposition schwenkbar ist. Dadurch ergibt sich der Vorteil, dass Wartungsarbeiten an den zumindest zwei bandförmigen Förderern 19, 20 bzw. die Wartung der Umlenkvorrichtung 17 gegenüber derzeit bekannten Umlenkvorrichtungen 17 deutlich vereinfacht wird und schneller durchgeführt werden kann.

Bevorzugt kann vorgesehen sein, dass die Umlenkvorrichtung 17 wenigstens ein Gelenk umfasst.

Bevorzugt kann vorgesehen sein, dass wenigstens ein erster bandförmiger Förderer 19 der zumindest zwei bandförmigen Förderer 19, 20 an wenigstens einem ersten Befestigungsarm 21 befestigt ist. Dadurch ergibt sich der Vorteil, dass die Wartung sowie Wartungsarbeiten an den zumindest zwei bandförmigen Förderer 19, 20 bzw. die Wartung der Umlenkvorrichtung 17 gegenüber derzeit bekannten Umlenkvorrichtungen 17 deutlich vereinfacht wird.

Bevorzugt kann vorgesehen sein, dass wenigstens ein zweiter bandförmiger Förderer 20 der zumindest zwei bandförmigen Förderer 19, 20 an wenigstens einem zweiten Befestigungsarm 22 befestigt ist.

Bevorzugt kann vorgesehen sein, dass die zumindest zwei bandförmigen Förderer 19, 20 in dem Betriebszustand der Umlenkvorrichtung 17 arretiert sind, wobei der erste bandförmige Förderer 19 und/oder der zweite bandförmige Förderer 20 der zumindest zwei bandförmigen Förderer 19, 20 in dem Wartungszustand der Umlenkvorrichtung 17 in eine Wartungsposition schwenkbar ist.

Bevorzugt kann vorgesehen sein, dass der wenigstens eine erste Befestigungsarm 21 zum Ausschwenken in die Wartungsposition der Umlenkvorrichtung 17 gegenüber wenigstens einem zweiten bandförmige Förderer 20 der zumindest zwei bandförmigen Förderer 19, 20 schwenkbar gelagert ist. Dadurch ergibt sich der Vorteil, dass die Wartung sowie Wartungsarbeiten an den zumindest zwei bandförmigen Förderern 19, 20 bzw. die Wartung der Umlenkvorrichtung 17 gegenüber derzeit bekannten Umlenkvorrichtungen 17 deutlich vereinfacht wird.

Besonders bevorzugt kann der zumindest eine erste Befestigungsarm 21 gegenüber dem zumindest einen zweiten Befestigungsarm 22, insbesondere mittels des wenigstens einem Gelenks, schwenkbar sein.

Besonders bevorzugt kann vorgesehen sein, dass die Umlenkvorrichtung 17 zumindest eine Hydraulikeinheit 30 zum Schwenken des wenigstens einen ersten Befestigungsarms 21 in die Wartungsposition der Umlenkvorrichtung 17 umfasst.

Insbesondere kann die zumindest eine Hydraulikeinheit 30 an dem ersten Endbereich 23 und/oder an dem zweiten Endbereich 24 der Umlenkvorrichtung 17 angeordnet sein.

Insbesondere kann die zumindest eine Hydraulikeinheit 30 an der wenigstens einen Antriebseinheit der zumindest zwei bandförmigen Förderer 19, 20 angeordnet sein.

Besonders bevorzugt kann vorgesehen sein, dass sich die zwei bandförmigen Förderer 19, 20 zumindest mittelbar gegenseitig abstützen. Fig. 15 zeigt eine bevorzugte Ausführungsform der Umlenkvorrichtung 17 in Frontansicht, wobei ersichtlich ist, dass sich die zwei bandförmigen Förderer 19, 20 zumindest mittelbar abstützen.

Bevorzugt kann vorgesehen sein, dass die zumindest zwei Befestigungsarme 21, 22, insbesondere an dem wenigstens einem Gelenk, um einen Winkel von kleiner als 100 Grad, bevorzugt um einen Winkel von kleiner als 80 Grad, besonders bevorzugt um einen Winkel von kleiner als 60 Grad, schwenkbar gelagert sind. Dadurch ergibt sich der Vorteil, dass die Teile der Umlenkvorrichtung 17 besser zugänglich sind, wodurch Wartungsarbeiten an der Umlenkvorrichtung 17 erleichtert werden.

Bevorzugt kann vorgesehen sein, dass die zumindest zwei Befestigungsarme 21, 22, insbesondere an dem wenigstens einem Gelenk, um einen Winkel von größer als 10 Grad, bevorzugt um einen Winkel von größer als 20 Grad, besonders bevorzugt um einen Winkel von größer als 30 Grad, schwenkbar gelagert sind. Dadurch ergibt sich der Vorteil, dass die Teile der Umlenkvorrichtung 17 besser zugänglich sind, wodurch Wartungsarbeiten an der Umlenkvorrichtung 17 erleichtert werden.

Bevorzugt kann vorgesehen sein, dass die zumindest zwei Befestigungsarme 21, 22, insbesondere an dem wenigstens einem Gelenk, um einen Winkel von im Wesentlichen 35 Grad schwenkbar gelagert sind. Dadurch ergibt sich der Vorteil, dass die Teile der Umlenkvorrichtung 17 besonders gut zugänglich sind, wodurch Wartungsarbeiten an der Umlenkvorrichtung 17 besonders erleichtert werden.

Bevorzugt kann vorgesehen sein, dass das wenigstens eine Gelenk eine Achse umfasst, welche parallel zur Förderrichtung angeordnet ist.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Förderanlage (1) zum Längstransport von länglichem Stückgut (2) mit einem umlaufenden Zugband und einer Stützkonstruktion (43) für das umlaufende Zugband, wobei mehrere Auflager (3) mittels wenigstens eines Zugelements (4) zu dem umlaufenden Zugband verbunden sind, wobei jedes der Auflager (3) eine Vertiefung (33) zum Auflegen des länglichen Stückguts (2) aufweist, wobei jedes der Auflager (3) an zumindest zwei voneinander beabstandeten Befestigungspunkten (34) mit dem wenigstens einen Zugelement (4) befestigt ist, wobei jedes der Auflager (3) eine Auflageeinheit (41) für das längliche Stückgut (2) umfasst, wobei die Auflageeinheit (41) die Vertiefung (33) für das längliche Stückgut (2) aufweist, **dadurch gekennzeichnet, dass** das umlaufende Zugband zumindest in einem Förderbereich (5) der Förderanlage (1) mittels Rollen (8) beweglich gegenüber der Stützkonstruktion (43) gelagert ist, dass das wenigstens eine Zugelement (4) aus Segmenten (35) ausgebildet ist, welche Segmente (35) mittels eines Verbinders (36) miteinander lösbar gekoppelt sind, dass jedes der Auflager (3) einen Grundkörper umfasst, und dass jede Auflageeinheit (41) an dem Grundkörper jedes Auflagers (3) befestigt ist.

2. Förderanlage (1) nach Anspruch 1, **dadurch gekennzeichnet, dass** jede Auflageeinheit (41) der Auflager (3) mit dem Grundkörper der Auflager (3) formschlüssig verbunden ist.

3. Förderanlage (1) nach Anspruch 1 oder 2, **dadurch gekennzeichnet, dass** das umlaufende Zugband zumindest in dem Förderbereich (5) der Förderanlage (1) kippsicher gelagert ist.

4. Förderanlage (1) nach einem der Ansprüche 1 bis 3, **dadurch gekennzeichnet, dass** die Rollen (8) zur beweglichen Lagerung des umlaufenden Zugbandes gegenüber der Stützkonstruktion (43) an dem umlaufenden Zugband angeordnet sind.

5. Förderanlage (1) nach einem der Ansprüche 1 bis 4, **dadurch gekennzeichnet, dass** der Grundkörper jedes Auflagers (3) Fortsätze für die Rollen (8) umfasst.

6. Förderanlage (1) nach einem der Ansprüche 1 bis 5, **dadurch gekennzeichnet, dass** jedes der Auflager (3) zumindest zwei Rollen (8) zur beweglichen Lagerung des umlaufenden Zugbandes gegenüber der Stützkonstruktion (43) umfasst, und dass die zumindest zwei Rollen (8) jedes Auflagers (3) in zwei Führungsschienen (6) in Längstransportrichtung (7) geführt sind.

7. Förderanlage (1) nach einem der Ansprüche 1 bis 6, **dadurch gekennzeichnet, dass** das wenigstens eine Zugelement (4) aus einem Verbundwerkstoff ausgebildet ist.

8. Förderanlage (1) nach einem der Ansprüche 1 bis 7, **dadurch gekennzeichnet, dass** das wenigstens eine Zugelement (4) als ein Gurt ausgebildet ist.

9. Förderanlage (1) nach einem der Ansprüche 1 bis 8, **dadurch gekennzeichnet, dass** eine Verbindungslinie durch die zumindest zwei Befestigungspunkte (34) quer, insbesondere orthogonal, zu der Längstransportrichtung (7) der Förderanlage (1) angeordnet ist.

10. Förderanlage (1) nach einem der Ansprüche 1 bis 9, **dadurch gekennzeichnet, dass** in wenigstens einem Abschnitt des Förderbereichs (5) an der Förderanlage (1) eine Schutzabdeckung (37) für die Rollen (8) der beweglichen Lagerung des umlaufenden Zugbandes gegenüber der Stützkonstruktion (43) angeordnet ist.

11. Förderanlage (1) nach einem der Ansprüche 1 bis 10, **dadurch gekennzeichnet, dass** die Förderanlage (1) eine Abwurfvorrichtung (13) umfasst, welche dazu ausgebildet ist das längliche Stückgut (2) in dem Förderbereich (5) seitlich von den Auflagern (3) abzuwerfen.

12. Förderanlage (1) nach einem der Ansprüche 1 bis 11, **dadurch gekennzeichnet, dass** die Förderanlage (1) einen Rückführbereich (38) umfasst, welcher gegenüberliegend und beabstandet zu dem Förderbereich (5) angeordnet ist und dass die Förderanlage (1) eine Schmutzführung (39) zum Umleiten von Schmutz aus den Förderbereich (5) in den Rückführbereich (38) umfasst.

13. Förderanlage (1) nach Anspruch 12, **dadurch gekennzeichnet, dass** die Förderanlage (1) eine Zugbandreinigungsvorrichtung (40) zur Reinigung des umlaufenden Zugbandes umfasst, welche Zugbandreinigungsvorrichtung (40) in dem Rückführbereich (38) angeordnet ist.

14. Sortieranlage mit wenigstens einer Förderanlage (1) nach einem der Ansprüche 1 bis13.

15. Sortieranlage nach Anspruch 14, **dadurch gekennzeichnet, dass** die Sortieranlage weiters eine Umlenkvorrichtung (17) für längliches Stückgut (2) umfasst, dass die Umlenkvorrichtung (17) einen Aufnahmebereich (18) aufweist, dass der Aufnahmebereich (18) dazu ausgebildet ist, das längliche Stückgut (2) eingangsseitig im Quertransport aufzunehmen und das längliche Stückgut (2) ausgangsseitig im Längstransport abzugeben, dass die Umlenkvorrichtung (17) zumindest zwei in einem Winkel zueinander angeordnete bandförmige Förderer (19, 20) in Längstransportrichtung (7) umfasst, wobei die zumindest zwei bandförmigen Förderer (19, 20) in einem Betriebszustand der Umlenkvorrichtung (17) den Aufnahmebereich (18) aufspannen.

## Claims

1. A conveying system (1) for longitudinally transporting elongated items (2) with a revolving traction belt and a supporting structure (43) for the revolving traction belt, wherein multiple supports (3) are connected to the revolving traction belt by means of at least one traction element (4), wherein each of the supports (3) has a recess (33) for placing the elongated items (2) on, wherein each of the supports (3) is fastened to the at least one traction element (4) in at least two spaced-apart fastening points (34), wherein each of the supports (3) comprises a support unit (41) for the elongated items (2), and wherein the support unit (41) has the recess (33) for the elongated items (2), **characterized in that** the revolving traction belt is supported by means of rollers (8) so that it is able to move relative to the supporting structure (43) at least in a conveying region (5) of the conveying system (1), **in that** the at least one traction element (4) is composed of segments (35), which segments (35) are detachably coupled to one another by means of a connector (36), **in that** each of the supports (3) comprises a base body, and **in that** each support unit (41) is fastened to the base body of each support (3).

2. The conveying system (1) according to claim 1, **characterized in that** each support unit (41) of the supports (3) is connected to the base body of the supports (3) in a form-fitting way.

3. The conveying system (1) according to claim 1 or 2, **characterized in that** the revolving traction belt is mounted in a tilt-proof way at least in the conveying region (5) of the conveying system (1).

4. The conveying system (1) according to one of claims 1 to 3, **characterized in that** the rollers (8) for supporting the revolving traction belt so that it is able to move relative to of the support structure (43) are positioned against the revolving traction belt.

5. The conveying system (1) according to one of claims 1 to 4, **characterized in that** the base body of each support (3) comprises extensions for the rollers (8).

6. The conveying system (1) according to one of claims 1 to 5, **characterized in that** each of the supports (3) comprises at least two rollers (8) for supporting the revolving traction belt so that it is able to move relative to the supporting structure (43) and **in that** the at least two rollers (8) of each support (3) are guided in two guide rails (6) in the longitudinal transport direction (7).

7. The conveying system (1) according to one of claims 1 to 6, **characterized in that** the at least one traction element (4) is made of a composite material.

8. The conveying system (1) according to one of claims 1 to 7, **characterized in that** the at least one traction element (4) is embodied in the form of a belt.

9. The conveying system (1) according to one of claims 1 to 8, **characterized in that** a connecting line through the at least two fastening points (34) is oriented transversely, in particular orthogonally, to the longitudinal transport direction (7) of the conveying system (1).

10. The conveying system (1) according to one of claims 1 to 9, **characterized in that** a protective cover (37) for the rollers (8) supporting the revolving traction belt so that it is able to move relative to the supporting structure (43) is positioned in at least one section of the conveying region (5) in the conveying system (1).

11. The conveying system (1) according to one of claims 1 to 10, **characterized in that** the conveying system (1) comprises an ejecting device (13) which is embodied to eject the elongated items (2) laterally from the supports (3) in the conveying region (5).

12. The conveying system (1) according to one of claims 1 to 11, **characterized in that** the conveying system (1) comprises a return region (38) which is positioned opposite and spaced apart from the conveying region (5), and **in that** the conveying system (1) comprises a debris guide (39) for diverting debris from the conveying region (5) into the return region (38).

13. The conveying system (1) according to claim 12, **characterized in that** the conveying system (1) comprises a traction belt cleaning device (40) for cleaning the revolving traction belt, which traction belt cleaning device (40) is positioned in the return region (38).

14. A sorting system with at least one conveying system (1) according to one of claims 1 to 13.

15. The sorting system according to claim 14, **characterized in that** the sorting system furthermore comprises a deflecting device (17) for elongated items (2), **in that** the deflecting device (17) has a receiving region (18), **in that** the receiving region (18) is embodied to receive the elongated items (2) on the input side in the transverse transport and to discharge the elongated items (2) on the output side in the longitudinal transport, and **in that** the deflecting device (17) comprises at least two belt-shaped conveyors (19, 20) positioned at an angle to one another in the longitudinal transport direction (7), wherein the at least two belt-shaped conveyors (19, 20) span the receiving region (18) in an operating state of the deflecting device (17).

## Revendications

1. Installation de chargement (1) pour le transport longitudinal de marchandises allongées (2) avec une bande de traction circulaire et une structure de support (43) pour la bande de traction circulaire, plusieurs supports (3) étant reliés à la bande de traction circulaire au moyen d'au moins un élément de traction (4), chacun des supports (3) présentant un renfoncement (33) pour poser les marchandises allongées (2), chacun des supports (3) étant fixé à l'au moins un élément de traction (4) en au moins deux points de fixation (34) espacés l'un de l'autre, chacun des supports (3) comprenant une unité d'appui (41) pour les marchandises allongées (2), l'unité d'appui (41) présentant le renfoncement (33) pour les marchandises allongées (2), **caractérisé en ce que** la bande de traction périphérique est montée de manière mobile par rapport à la structure de support (43) au moyen de rouleaux (8) au moins dans une zone de transport (5) du convoyeur (1), **en ce que** le au moins un élément de traction (4) est formé de segments (35), lesquels segments (35) sont couplés entre eux de manière amovible au moyen d'un connecteur (36), **en ce que** chacun des supports (3) comprend un corps de base, et **en ce que** chaque unité de support (41) est fixée au corps de base de chaque support (3).

2. Installation de chargement (1) selon la revendication 1, **caractérisée en ce que** chaque unité d'appui (41) des appuis (3) est reliée par complémentarité de forme au corps de base des appuis (3).

3. Installation de chargement (1) selon la revendication 1 ou 2, **caractérisée en ce que** la bande de traction périphérique est montée au moins dans la zone de chargement (5) de l'installation de chargement (1) de manière à ne pas basculer.

4. Installation de chargement (1) selon l'une des revendications 1 à 3, **caractérisée en ce que** les rouleaux (8) sont disposés sur la bande de traction tournante pour le stockage mobile de la bande de traction tournante par rapport à la structure de support (43).

5. Installation de chargement (1) selon l'une quelconque des revendications 1 à 4, **caractérisée en ce que** le corps de base de chaque support (3) comprend des prolongements pour les rouleaux (8).

6. Installation de chargement (1) selon l'une quelconque des revendications 1 à 5, **caractérisée en ce que** chacun des supports (3) comprend au moins deux rouleaux (8) pour le montage mobile de la bande de traction tournante par rapport à la structure de support (43), et **en ce que** les au moins deux rouleaux (8) de chaque support (3) sont guidés dans deux rails de guidage (6) dans la direction de transport longitudinal (7).

7. Installation de chargement (1) selon l'une des revendications 1 à 6, **caractérisée en ce que** le ou les éléments de traction (4) sont constitués d'un matériau composite.

8. Installation de chargement (1) selon l'une des revendications 1 à 7, **caractérisée en ce que** le ou les éléments de traction (4) sont conçus sous forme de courroie.

9. Installation de chargement (1) selon l'une quelconque des revendications 1 à 8, **caractérisée en ce qu'**une ligne de liaison est disposée à travers les au moins deux points de fixation (34) transversalement, en particulier orthogonalement, à la direction de transport longitudinal (7) de l'installation de chargement (1).

10. Installation de chargement (1) selon l'une des revendications 1 à 9, **caractérisée en ce que** dans au moins une section de la zone de chargement (5) sur l'installation de chargement (1) est disposé un couvercle de protection (37) pour les rouleaux (8) du support mobile de la bande de traction tournante par rapport à la structure de support (43).

11. Installation de chargement (1) selon l'une des revendications 1 à 10, **caractérisée en ce que** l'installation de chargement (1) comprend un dispositif d'éjection (13), qui est conçu pour éjecter le produit de stuc long (2) dans la zone de chargement (5) latéralement par rapport aux supports (3).

12. Installation de chargement (1) selon l'une des revendications 1 à 11, **caractérisée en ce que** l'installation de chargement (1) comprend une zone de retour (38) qui est disposée en face et à distance de la zone de chargement (5) et **en ce que** l'installation de chargement (1) comprend un guidage de saleté (39) pour dévier la saleté de la zone de chargement (5) dans la zone de retour (38).

13. Installation de chargement (1) selon la revendication 12, **caractérisée en ce que** l'installation de chargement (1) comprend un dispositif de nettoyage de bande de traction (40) pour le nettoyage de la bande de traction tournante, ce dispositif de nettoyage de bande de traction (40) étant disposé dans la zone de retour (38).

14. Installation de tri avec au moins une installation de chargement (1) selon l'une quelconque des revendications 1 à 13.

15. Installation de tri selon la revendication 14, **caractérisée en ce que** l'installation de tri comprend en outre un dispositif de déviation (17) pour un produit de stuc long (2), **en ce que** le dispositif de déviation (17) présente une zone de réception (18), **en ce que** la zone de réception (18) est conçue pour recevoir le produit de stuc long (2) côté entrée dans le transport transversal et pour libérer le produit de stuc long (2) côté sortie dans le transport longitudinal, **en ce que** le dispositif de déviation (17) comprend au moins deux convoyeurs en forme de bande (19, 20) disposés à un angle l'un par rapport à l'autre dans la direction de transport longitudinal (7), les au moins deux convoyeurs en forme de bande (19, 20) serrant la zone de réception (18) dans un état de fonctionnement du dispositif de déviation (17).
